(19) Europäisches Patentamt / European Patent Office / Office européen des brevets

(11) **EP 2 556 446 B1**

(12) **EUROPEAN PATENT SPECIFICATION**

(45) Date of publication and mention
of the grant of the patent:
**12.12.2018 Bulletin 2018/50**

(21) Application number: **11713457.7**

(22) Date of filing: **04.04.2011**

(51) Int Cl.:
***G06F 17/30*** (2006.01)

(86) International application number:
**PCT/US2011/031123**

(87) International publication number:
**WO 2011/126995 (13.10.2011 Gazette 2011/41)**

(54) **COLUMNAR STORAGE REPRESENTATIONS OF RECORDS**

SPALTENARTIGE SPEICHERDARSTELLUNGEN VON DATENSÄTZEN

REPRÉSENTATIONS D'ENREGISTREMENTS MIS EN PAGE EN COLONNES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.04.2010 US 321688 P
05.04.2010 US 321106 P**

(43) Date of publication of application:
**13.02.2013 Bulletin 2013/07**

(73) Proprietor: **Google LLC
Mountain View, CA 94043 (US)**

(72) Inventors:
• **GUBAREV, Andrey**
  **Bellevue, Washington 98005 (US)**
• **MELNIK, Sergey**
  **Kirkland, Washington 98033 (US)**
• **LONG, Jing Jing**
  **Bellevue, Washington 98004 (US)**
• **ROMER, Geoffrey M.**
  **Kirkland, Washington 98033 (US)**
• **SHIVAKUMAR, Narayanan**
  **Bellevue, Washington 98005 (US)**
• **TOLTON, Matthew B.**
  **Kirkland, Washington 98034 (US)**
• **VASSILAKIS, Theodore**
  **Kirkland, Washington 98033 (US)**

(74) Representative: **Betten & Resch
Patent- und Rechtsanwälte PartGmbB
Maximiliansplatz 14
80333 München (DE)**

(56) References cited:
**US-A1- 2007 022 103     US-A1- 2009 006 399**

• **DANIEL J ABADI ET AL: "SW-Store: a vertically partitioned DBMS for Semantic Web data management", THE VLDB JOURNAL ; THE INTERNATIONAL JOURNAL ON VERY LARGE DATA BASES, SPRINGER, BERLIN, DE, vol. 18, no. 2, 4 February 2009 (2009-02-04), pages 385-406, XP019723888, ISSN: 0949-877X**
• **MILENA IVANOVA ET AL: "Self-organizing strategies for a column-store database", PROCEEDINGS OF THE 11TH INTERNATIONAL CONFERENCE ON EXTENDING DATABASE TECHNOLOGY ADVANCES IN DATABASE TECHNOLOGY, EDBT '08, 25 March 2008 (2008-03-25), - 30 March 2008 (2008-03-30), pages 157-168, XP55000153, New York, New York, USA DOI: 10.1145/1353343.1353366 ISBN: 978-1-59-593926-5**
• **DANIEL J ABADI ET AL: "Materialization Strategies in a Column-Oriented DBMS", DATA ENGINEERING, 2007. ICDE 2007. IEEE 23RD INTERNATIONAL CONFERENCE ON, IEEE, PI, 1 April 2007 (2007-04-01), pages 466-475, XP031095790, ISBN: 978-1-4244-0802-3**

**Description**

TECHNICAL FIELD

This document generally describes techniques, methods, systems, and mechanisms for generating and processing columnar storage representations of records.

BACKGROUND

The publication of Daniel J. Abadi et al: "SW-Store: a vertically partitioned DBMS for Semantic Web data management", The VLDB Journal ; The International Journal of Very Large Data Bases, Springer, Berlin, DE, (20090204), vol. 18, no. 2, ISSN 0949-877X, pages 385 - 406, XP019723888, examines the reasons why current data management solutions for RDF data scale poorly, and explores the fundamental scalability limitations of these approaches. The publication of Daniel J. Abadi et al reviews the state of the art for improving performance of RDF databases and considers a recent suggestion, "property tables". Then it is discussed why this solution has undesirable features. As an improvement, an alternative solution is presented: vertically partitioning the RDF data. The performance of vertical partitioning is compared with prior art on queries generated by a Web-based RDF browser over a large-scale (more than 50 million triples) catalog of library data. The results of the publication of Daniel J. Abadi et al show that a vertically partitioned schema achieves similar performance to the property table technique while being much simpler to design. Further, if a column-oriented DBMS (a database architected specially for the vertically partitioned case) is used instead of a row-oriented DBMS, another order of magnitude performance improvement is observed, with query times dropping from minutes to several seconds. Encouraged by these results, the publication of Daniel J. Abadi et al describes the architecture of SW-Store, a new DBMS that implements these techniques to achieve high performance RDF data management.

The present disclosure generally relates to large-scale analytical data processing. Such data processing has become widespread in web companies and across industries, not least due to low-cost storage that enabled collecting vast amounts of business-critical data. Putting this data at the fingertips of analysts and engineers has grown increasingly important; interactive response times often make a qualitative difference in data exploration, monitoring, online customer support, rapid prototyping, debugging of data pipelines, and other tasks. Performing interactive data analysis at scale demands a high degree of parallelism. For example, reading one terabyte of compressed data in one second using today's commodity disks may require tens of thousands of disks. Similarly, CPU-intensive queries may need to run on thousands of cores to complete within seconds.

SUMMARY

Objects of the present invention are achieved by subject matters of independent claims. Dependent claims define further exemplary embodiments of the present invention.

A scalable, interactive ad-hoc query system is herein disclosed for analysis of data. By combining multi-level execution trees and columnar data layout, the described system and methods is capable of running rapid and efficient queries such as aggregation queries. A columnar storage representation for nested records, a prevalent data model that may be used in many web-scale and scientific datasets, is described. In accordance with an embodiment, a record is decomposed into column stripes, each column encoded as a set of blocks, each block containing field values and repetition and definition level information. Level information is generated using a tree of field writers, whose structure matches the field hierarchy in the record schema. The record can be assembled from the columnar data efficiently using a finite state machine that reads the field values and level information for each field and appends the values sequentially to the output records. If only a subset of fields need to be retrieved, a simpler finite state machine can be constructed that is cheaper to execute. Moreover, by storing additional metadata such as constraint information with the columnar storage representation, additional types of queries can be supported.

A multi-level serving tree is used to execute queries. In one implementation complementary to the present invention, a root server receives an incoming query, reads metadata from the tables, and routes the queries to a next level in the serving tree. Leaf servers communicate with a storage layer or access the data on local storage, where the stored data can be replicated, and read stripes of nested data in the columnar representation. Each server can have an internal execution tree corresponding to a physical query execution plan, comprising a set of iterators that scan input columns and emit results of aggregates and scalar functions annotated with level information. In another exemplary implementation, a query dispatcher is provided which schedules queries based on their priorities and balances the load. The query dispatcher also provides fault tolerance when one server becomes much slower than others or as a replica becomes unreachable. The query dispatcher can compute a histogram of processing times for execution threads on the leaf servers and reschedule to another server when processing time takes a disproportionate amount of time.

The columnar data may be queried *in situ.* Maintaining the columnar data on a common storage layer and providing mechanisms to assemble records from the columnar data enables operability with data management tools that analyze data in a record structure. The system may scale to numerous CPUs and be capable of rapidly reading large amounts of data. Particular embodiments can be implemented, in certain instances, to realize one or more of the following advantages. Nested data may be operated on *in situ,* such that the data may be accessed without loading the data with a database management system. Queries of nested data may be performed in a reduced execution time than required by other analysis programs. A columnar storage data structure that is implemented on a common storage layer enables multiple different analysis programs to access the columnar storage data structure.

The details of one or more embodiments are set forth in the accompanying drawings and the description below. Other features, objects, and advantages will be apparent from the description and drawings, and from the claims.

## DESCRIPTION OF DRAWINGS

Figure 1 illustrates record-wise v. columnar representation of nested data.

Figure 2 illustrates two sample nested records and their schema.

Figure 3 illustrates column-striped representations of the sample nested records.

Figure 4 is an algorithm for dissecting a record into columns.

Figure 5 illustrates an automaton for performing complete record assembly.

Figure 6 illustrates an automaton for assembly records from two fields, and the records that the automaton produces.

Figure 7 is an algorithm for constructing a record assembly automaton.

Figure 8 is an algorithm for assembling a record from columnar data.

Figure 9 depicts a sample query that performs projection, selection, and within-record aggregation.

Figure 10 illustrates a system architecture and execution inside a server node.

Figure 11 is a table illustrating the datasets used in the experimental study.

Figure 12 is a graph that illustrates the performance breakdown that may occur when reading from a local disk.

Figure 13 is a graph that illustrates execution of both MapReduce and the described system on columnar v. record-oriented storage.

Figure 14 is a graph that illustrates the execution time as a function of serving tree levels for two aggregation queries.

Figure 15 is a graph that illustrates histograms of processing times.

Figure 16 is a graph that illustrates execution time when the system is scaled from 1000 to 4000 nodes using a top-k query.

Figure 17 is a graph that illustrates a percentage of processed tables as a function of processing time per tablet.

Figure 18 is a graph that illustrates query response time distribution in a monthly workload.

Figure 19 is a block diagram of a system for generating and processing columnar storage representations of nested records.

Figure 20 is a flow chart of an example process for generating columnar data.

Figure. 21 is a block diagram of computing devices that may be used to implement the systems and methods described in this document, as either a client or as a server or plurality of servers.

Like reference symbols in the various drawings indicate like elements.

## DETAILED DESCRIPTION

This document describes techniques, methods, systems, and mechanisms for generating and processing columnar storage representations of records. As an illustration, an organization may store data from web pages in records of nested information. The nested information may be compiled in a columnar data storage format that enables efficient queries of the data using a multi-level execution tree. The columnar data may be re-assembled into records for input into analysis programs that operate on record-oriented data.

More specifically, each record may be an instantiation of a schema that defines a formatting of records, where the records are created in accordance with the schema. For example, a schema may identify various fields for storing information about a web page and a structure for organizing fields in a record and their corresponding values. When a record for describing the characteristics of a web page is generated, the record may include for each field a data element and a corresponding value. The data element may define the semantics of the value in accordance with a definition in the schema. The term data element and field may be used interchangeably in this document. Field may also refer to a combination of a data element and a corresponding value.

A particular record may need not include all of the fields that are defined by a schema. Thus, the schema may serve as a 'template' from which fields may be selected for the particular record. For example, the schema may include a field for defining information about video content in a web page. If a web page does not include video content, then the record corresponding to the web page may not include the field from the schema that defines information about videos on the web page. Thus, some of the fields may be 'optional.'

Some of the fields in a record, however, may be 'required.' For example, a 'required' field in the schema may be a Uniform Resource Locator (URL) of a source location for the document that served the web page. The field may be required because every web page document may be retrieved from a source location (i.e., there is a URL available for every document) and because the field may be required to further process information on the web page (e.g., to determine if the content has changed).

A field may also be 'repeatable.' A field that is in the schema and that is defined as repeatable may be replicated at the location defined by the schema repeatedly in an instantiation of the schema (i.e., in a record). For example, a schema may include a field that is for defining documents that link to the web page. The schema may only specify the field a single time, but may indicate that the field is repeatable (e.g., because several documents may link to a particular web page). Thus, a record for the web page may include multiple fields that identify a value for a linking web page. The repeated fields may be located at a same level and nested beneath a parent field in the record (as discussed in more detail below).

The fields of the schema (and thus the fields in the records) may be nested. In other words, some fields may be children of other fields, which may be referenced as the parent fields, grandparent fields, etc. In some examples, children nodes are those nodes in the schema that are found within a pair of opening and closing curly brackets immediately following the parent node. Other implementations for nesting, however, may be utilized (e.g., the use of a start tag for the field and an end tag for the field). Thus, except for the fields that are at the highest level (e.g., the fields that are not children of any other fields), each field may have a parent field.

Nesting may be helpful for organizing information into conceptually-related chunks of information. Returning to our earlier example, the schema may include a 'Video' field. The 'Video' field may include several children fields that may identify the characteristics of the video (e.g., how long the video is, the format of the video, and the resolution of the video). Thus, when a record is constructed, children nodes may not be placed in the record if their parent nodes are not present. In other words, a record for a web page that does not include a video may not include a 'VideoLength' field because the record does not include a 'Video' field (i.e., the parent of the 'VideoLength' field). Application programs that enable viewing and editing a record may visually nest the dependent children off of the parent children (e.g., indent the children to the right of the parent field).

Analyzing millions of records may be time consuming. In some examples a user is interested in a data from a single field, but each of the records must be accessed in its entirety. For example, a user may request that an analysis program check each of millions of records to identify those records that are associated with web pages that include videos that are longer than ten minutes and that have a 'High' resolution. Because each record may be stored as a separate data structure, each entire record may need to be loaded into a database management system in order to query the record to determine if the record includes the particular combination of video length and resolution.

Such a loading of every single record may be prohibitively expensive, both on the quantity of servers that are required to perform the task and an amount of time necessary to complete the query. Significant time savings can be obtained by storing all of the values for a particular field - selected from across the millions of records - together in a contiguous portion of memory. Such storage of values from several records but for a particular field is called columnar storage. In contrast, the example where information for a particular record is stored contiguously in memory is referred to as record-oriented storage.

Columnar storage for nested records, however, poses unique difficulties. A field in a record may be identified by its path, which may include a listing of the field and the parent fields (e.g., GrandParent.Parent.Child). Because one or more of the fields in the path may be repeating, there may be several instances of a field with the same path name. Thus, when looking at a consecutive listing of columnar data for a particular field, a mechanism is needed to identify which values belong to which records, and for those records that include multiple values for a particular path, what is the respective location of the value in the record. In other words, given a sequence of values in a columnar structure, a mechanism is needed to reconstruct the structure of the record from the values.

The mechanism for reconstructing the structure of a record from columnar data includes storing, for each value in the columnar data, a 'repetition' level and a 'definition' level. Each 'level' may be a sequence of bits that represents a number. For example, a 'level' of 3 may be represented by two bits (e.g., '11'). In another example, a 'level' of 5 may be represented by three bits (e.g., '101').

The 'repetition' level that is stored for a particular value indicates the field in the value's path that has most recently repeated. As an illustration, a column of values may be stored for a field with the path 'Video.Resolution.Width.' A repetition level of '1' may indicate that the 'Video' field most recently repeated, while a repetition level of '2' may indicate that the 'Resolution' field most recently repeated. Recently repeating can indicate, from the position of the value in the record from which the value was selected and working upwards towards the beginning of the document, which field in the path 'Video.Resolution.Width' is the first to reach a count of two (e.g., which field is encountered for the second time first).

For example, working upwards from the location of the 'Width' value, each field is encountered a single time. Finding a second instance of each field requires traversing to the depths of the next, adjacent nested field (and possibly to further nestings). Thus, a 'Video' field may be encountered that does not include any 'Resolution' children (e.g., because the 'Resolution' field is optional or a repeating field). Thus, the 'Video' field has been encountered a second time and is thus the most recently repeated field. A repetition level of '1' is assigned to the value.

A repetition level of '0' may indicate that the field does not include a most recently repeated value (e.g., it has been encountered for the first time in the record during a top-down scan). In various examples, a 'required' field in a path does not have a repetition level. For example, if the 'Resolution' field is required for the 'Video.Resolution.Width' path, the range of resolution levels may be either '0' or '1.' 'Resolution' may not have a level because it is always present in the record when the 'Video' field is present. Thus, if 'Resolution' was assigned a level of '2,' it may always be encountered before 'Video' and thus a level of '1' may not ever be assigned. Thus, not including a repetition level for required fields may enable a number of different resolution levels to be reduced, and a number of bits to represent the resolution level may be reduced.

If the field 'Width' in the above example is an 'optional' or 'repeating' field, a record may not always include a value for the 'Width' field. Thus, a column of values for the 'Video.Resolution.Width' path may use a mechanism to designate when a 'Video' or a 'Video. Resolution' path is found in the record but the 'Width' field has not been instantiated in the record. This mechanism may include storing, in the 'Video.Resolution.Width' column of data, a 'Definition' level for each 'Video' or 'Video.Resolution' field in the record regardless whether the 'Width' field is instantiated. The 'Definition' level may indicate how many of the fields in the 'Video.Resolution.Width' path that could be missing (e.g., because the field is optional or repeatable) are actually present.

Thus, if the field 'Video' is present in the record but no corresponding 'Resolution' child is instantiated, a definition level of '1' may be recorded in the 'Video.Resolution.Width' column. If the field 'Video.Resolution' is present in the record, but no corresponding 'Width' child is instantiated, a definition level of '2' may be recorded. If the field 'Video.Resolution.Width' is present in the record, a definition level of '3' may be recorded.

As such, a definition level may be a generated for each data element path or portion of a data element path in a record. For example, the path 'Video.Resolution.Width' may have a definition level of '3' that identifies the quantity of data elements included in the path 'Video.Resolution.Width. As another example, the path 'Video.Resolution' may have a definition level of '2' that identifies the quantity of data elements included in the path 'Video.Resolution,' even though the 'Width' data element was not instantiated in the data record.

Therefore, whenever the 'Definition' level (which represents the number of fields that could be undefined but are actually defined) is less than the number of fields that could be defined, a missing occurrence of the 'Width' field may be identified.

In various examples, a 'Definition' level is a Boolean value instead of an integer. A Boolean value may be used instead of an integer where knowing which containing object was undefined was not important. For example, a definition level for a value for the Width field of the 'Video.Resolution.Width' path may be 'NULL' where the system does not need to know which of the parent fields are instantiated. The combination of the 'Repetition' level and the 'Definition' level may enable the structure of the record to be reconstructed.

A column of data for a particular field (e.g., the 'Video.Resolution.Width' field) may include the values for the field from multiple records, corresponding repetition and definition levels (acknowledging that some 'missing' values may have a repetition and a definition level), and header information. In some examples, the values are stored consecutively and adjacent. In other words, if a value for one 'Video.Resolution.Width' field was '700' and the value for a next 'Video.Resolution.Width' field was '800,' a portion of the column as stored in memory may read '700800.' In this example, a header in the column may identify that the each value has a fixed width (e.g., a fixed binary representation to hold the numbers 700 and 800).

In some examples, the stored values are represented by strings. For example, instances of the 'Width' field may include the values 'Small' and 'Medium.' In some examples, the various string values may be a fixed length (e.g., a null value may be added to the beginning or end of the 'Small' value to make the string the same length as the 'Medium' value). In some examples, however, each stored string may include an identifier in a beginning portion of the string that identifies a length of the string. For example, the 'small' value may include an identifier that indicates that the string is five digits long (or a corresponding number of binary bits).

Because the values may be stored consecutively in the columnar stripe, the 'repetition' and 'definition' levels may be stored at the beginning of the columnar stripe. In some examples, the 'repetition' and 'definition' levels are stored in pairs for a particular value (whether instantiated or missing). As an illustration, a repetition level of 3 may be stored in the first four bits of a byte and a definition level of 1 may be stored in the last four bits of the byte. A next byte in the header may include a repetition level and a definition level for the next instance of the field in the record (or the first instance in the subsequent record).

The number of bits used to represent the repetition and definition levels may be based on a maximum level value. For example, if the maximum repetition level is 3, the repetition level may be represented with two bits. If the maximum repetition level is 4 the repetition level may be represented with three bits. The header may include information that identifies the length of the repetition and definition levels.

In various examples, the repetition levels may be stored consecutively in memory and the definition levels may be stored consecutively in memory (e.g., not in pairs). In various examples, the repetition and definition levels may be stored in a group with their corresponding value (if the value is instantiated). In other words, a sequence of information in the columnar stripe may read

Value1:Repetition Level1:DefinitionLevel1:Value2:RepetitionLevel2:Definition Leve 12, and so on.

The columnar stripes may be compressed into blocks of information. For example, each columnar stripe may be split into a set of blocks, with each block including its own respective header. A first block may include the first 800,000 values and a second block may include a second 800,000 values from a stripe of 1.6 million values. A block header may include the repetition and definition levels along with additional information that may be used to help analyze the portion of the columnar stripe that is represented by the block, and to reconstruct the columnar stripe.

In some examples, the block header includes an 'Assertion' value that defines a type of data that is found in the block's values. For example, a block for the 'Video.Resolution.Width' field may not include any values that list 'Large' width resolution. Thus, the 'Assertion' value may indicate that the values only include 'Small' and 'Medium' values. If a query is performed for records that include 'High' width resolution videos, then the described block may be avoided by the querying system.

The system described in this document may perform queries on columnar stripes without reconstructing the information in the columnar stripes into records, and without loading information from the columnar stripes into a database (e.g., without using 'Insert' clause). Thus, the data may be accessed *in situ,* which may provide computational analysis time savings on the order of magnitudes.

The querying system may employ many of the clauses employed for querying relational databases. Additional clauses that are specific to non-relational data, however, may be employed. For example, a WITHIN clause may allow for operations to be performed on multiple instances of a field within a single record or a portion of a record. A relational database, however, may be unable to store more than a single instance of a field in a row (e.g., a representation of a record). Thus, a query on a relational database may be fundamentally unable to perform queries 'within' a record.

As an example of the WITHIN clause, values for a particular field may be multiplied. Supposing that the query instructions request that all values for 'MutualFund.InterestRate' be multiplied together for a particular record (where each record may be for a particular account holder). The querying system may find all of the 'MutualFund.InterestRate' values within the single record and multiply them together.

Another example of a clause that may be specific to non-relational nested data is the OMIT IF clause. This clause may enable a record to be filtered to remove instances of fields if a particular condition is met (e.g., a new columnar stripe or record may be created with specified fields removed). As an illustration, a stripe of values that list employee salaries may be queried and a new stripe that removes employees with salaries above $90,000 may be generated using the OMIT IF clause.

## 1. INTRODUCTION

Large-scale parallel computing may be performed using shared clusters of commodity machines. *See* L. A. Barroso and U. Holzle. The Datacenter as a Computer: An Introduction to the Design of Warehouse-Scale Machines. Morgan & Claypool Publishers, 2009. A cluster may host a multitude of distributed applications that share resources, have widely varying workloads, and run on machines with different hardware parameters. An individual computing machine in a distributed application may take much longer to execute a given task than others, or may never complete due to failures or preemption by a cluster management system. Hence, dealing with stragglers (e.g., computing tasks with significant latency) and failures is may achieve fast execution and fault tolerance. *See* G. Czajkowski. Sorting 1PB with MapReduce. Official Google Blog, Nov. 2008. At http://googleblog.blogspot.com/2008/11/sorting-1pb-with-mapreduce.html.

The data used in web and scientific computing is often nonrelational. Hence, a flexible data model may be beneficial in these domains. Data structures used in programming languages, messages exchanged by distributed systems, web traffic logs, etc. may lend themselves to a nested representation. For example, a nested representation of data may include a multiple fields that each include several levels of children fields. Some of the children fields may include corresponding data. Normalizing and recombining such data at web scale may be computationally expensive. A nested data model underlies some of the structured data processing at major web companies.

This document describes a system that supports interactive analysis of very large datasets over shared clusters of commodity machines. Unlike traditional databases, it is capable of operating on *in situ* nested data. *In situ* refers to the ability to access data 'in place', for example, in a distributed file system like Google File System (*see* S. Ghemawat, H. Gobioff, and S.-T. Leung. The Google File System. In SOSP, 2003) or another storage layer like Bigtable (*see* F. Chang, J. Dean, S. Ghemawat, W. C. Hsieh, D. A. Wallach, M. Burrows, T. Chandra, A. Fikes, and R. Gruber. Bigtable:

A Distributed Storage System for Structured Data. In OSDI, 2006).

The system can execute many queries over such data that may ordinarily require a sequence of MapReduce jobs, but at a fraction of the execution time. See J. Dean and S. Ghemawat. MapReduce: Simplified Data Processing on Large Clusters. In OSDI, 2004. The described system may be used in conjunction with MapReduce to analyze outputs of MapReduce pipelines or rapidly prototype larger computations. Examples of using the system include:

- Analysis of web logs and crawled web documents;
- Install data for applications served by an online marketplace;
- Crash data for application products;
- Multimedia playback statistics;
- OCR results from scans of books;
- Spam analysis;
- Debugging of map tiles;
- Tablet migrations in managed Bigtable instances;
- Results of tests run on a distributed build system;
- Disk I/O statistics for hundreds of thousands of disks;
- Execution logs of MapReduce jobs across several data centers; and
- Symbols and dependencies in a codebase.

The described system builds on ideas from web search and parallel database management systems. First, its architecture builds on the concept of a serving tree used in distributed search engines. *See* J. Dean. Challenges in Building Large-Scale Information Retrieval Systems: Invited Talk. In WSDM, 2009. Like a web search request, a query gets pushed down the tree and rewritten at each step. The result of the query is assembled by aggregating the replies received from lower levels of the tree.

Second, the described system provides a high-level, SQL-like language to express ad hoc queries. In contrast to layers such as Pig (see C. Olston, B. Reed, U. Srivastava, R. Kumar, and A. Tomkins. Pig Latin: a Not-so-Foreign Language for Data Processing. In SIGMOD, 2008.) and Hive (Hive. http://wiki.apache.org/hadoop/Hive, 2009), the querying system executes queries natively without translating them into MapReduce jobs.

Lastly, the described system uses a column-striped storage representation, which enables it to read less data from secondary storage and reduce CPU cost due to cheaper compression. Column stores for analyzing relational data, (D. J. Abadi, P. A. Boncz, and S. Harizopoulos. Column-Oriented Database Systems. VLDB, 2(2), 2009), are not believed to have extended to nested data models. The columnar storage format that is described may be supported by MapReduce, Sawzall (*see* R. Pike, S. Dorward, R. Griesemer, and S. Quinlan. Interpreting the Data: Parallel Analysis with Sawzall. Scientific Programming, 13(4), 2005), and FlumeJava (*see* C. Chambers, A. Raniwala, F. Perry, S. Adams, R. Henry, R. Bradshaw, and N. Weizenbaum. FlumeJava: Easy, Efficient Data-Parallel Pipelines. In PLDI, 2010).

In Section 4, this document describes a columnar storage format for nested data. Algorithms are presented for dissecting nested records into columns and reassembling them.

In Section 5, a query language for processing data in that is stored in the columnar storage format is described. The query language and execution of the language are designed to operate efficiently on column-striped nested data and do not require restructuring of nested records.

In Section 6, an illustration of applying execution trees that are used in web search serving systems to database processing is provided. The benefits for answering aggregation queries efficiently is explained.

In Section 7, experiments conducted on system instances are presented.

SECTION 2: EXAMPLE SCENARIO

Suppose that Alice, an engineer at a web-search company, comes up with an idea for extracting new kinds of signals from web pages. She runs a MapReduce job that cranks through the input data that includes content from the web pages and produces a dataset containing the new signals, stored in billions of records in a distributed file system. To analyze the results of her experiment, she launches the system described in this document and executes several interactive commands:

```
DEFINE TABLE t AS /path/to/data/*
SELECT TOP(signal1, 100), COUNT(*) FROM t
```

Alice's commands execute in seconds. She runs a few other queries to convince herself that her algorithm works. She finds an irregularity in signal1 and digs deeper by writing a FlumeJava program that performs a more complex analytical computation over her output dataset. Once the issue is fixed, she sets up a pipeline which processes the incoming input data continuously. She formulates a few canned SQL queries that aggregate the results of her pipeline across various dimensions, and adds them to an interactive dashboard (e.g., a web page about a service that explains the service and details statistics on the service). Finally, she registers her new dataset in a catalog so other engineers can locate and query the dataset quickly.

The above scenario may require interoperation between the query processor and other data management tools. The first ingredient for such interoperation is a common storage layer. The Google File System is one such distributed storage layer that may be used. The Google File System manages very large replicated datasets across thousands of machines and tens of thousands of disks.

Replication helps preserve the data despite faulty hardware and achieve fast response times in presence of stragglers. A high-performance shared storage layer is a key enabling factor for *in situ* data management. It allows accessing the data without a time-consuming loading phase, which is a major impedance to database usage in analytical data processing (where it is often possible to run dozens of MapReduce analyses before a database management system is able to load the data and execute a single query). For example, when a database management system is used to analyze data, the database may need to be loaded with data using 'Insert' commands. Such loading may not be required by the described system. As an added benefit, data in a file system can be conveniently manipulated using standard tools, e.g., to transfer to another cluster, change access privileges, or identify a subset of data for analysis based on file names.

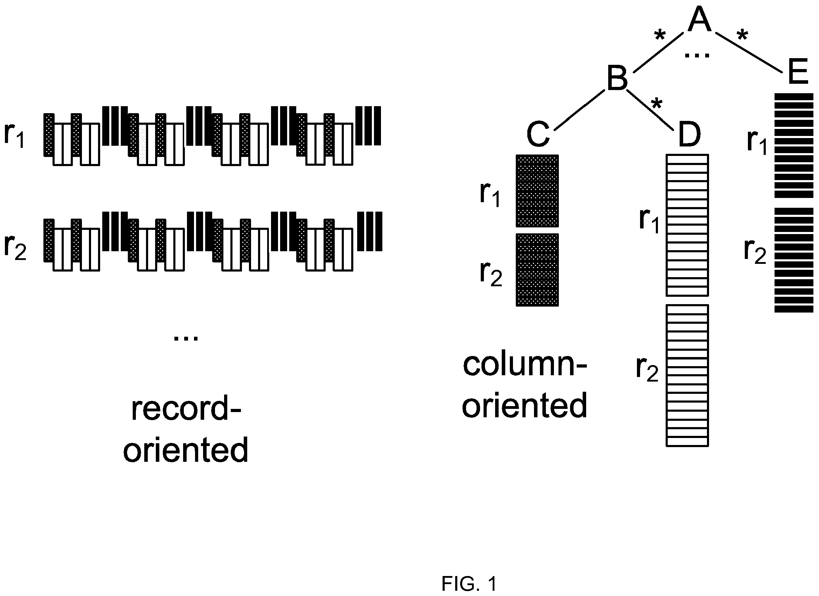

A second ingredient for building interoperable data management components is a shared storage format. Columnar storage is used for flat relational data but adapting columnar storage to a nested data model allows the technique to be applied to web data. Figure 1 illustrates the idea that all values of a nested field in a data structure are stored contiguously. For example, in the column-oriented representation of nested data, all values for a particular nested field within a data structure (e.g., the field A.B.C) are stored adjacent to each other and contiguously in memory. Hence, values for the field A.B.C can be retrieved from memory without reading values from the field A.E and values from the field A.B.D.

Additionally, values for the same particular field in different instances of a data structure (e.g., a 'record') may be stored contiguously. For example, the values for field A.B.C for the record 'r1' are stored adjacent to the values for the same field for the record 'r2.' To the contrary, in the 'record-oriented' representation of nested data, values for all fields within a particular record are stored contiguously. In other words, the data values for a particular field are not bunched together.

The challenge that the described columnar storage format addresses is how to preserve all structural information and be able to reconstruct records from an arbitrary subset of fields. This document next discusses the data model from which the fields in the columnar storage format may be filled, and then turn to algorithms for processing the columnar storage and query processing on data in the columnar storage.

SECTION 3: DATA MODEL

This section describes the data model used by the described system and introduces some terminology used later. The described Protocol Buffers data model originated in the context of distributed systems, and is available as an open source implementation. See (Protocol Buffers: Developer Guide. Available at http://code.google.com/apis/protocolbuffers/docs/overview.html). The data model is based on strongly-typed nested records. Its abstract syntax is given by:

$$\tau = dom \mid < A_1 : \tau \, [*|?], \ldots, A_n : \tau \, [*|?] >$$

where $\tau$ is an atomic type or a record type. Atomic types in *dom* comprise integers, floating-point numbers, strings, etc. Records consist of one or multiple fields. Field i in a record has a name $A_i$ and an optional multiplicity label. Repeated fields (*) may occur multiple times in a record. They are interpreted as lists of values, i.e., the order of field occurrences in a record is significant. Optional fields (?) may be missing from the record. Otherwise, a field is required (e.g., must appear exactly once).

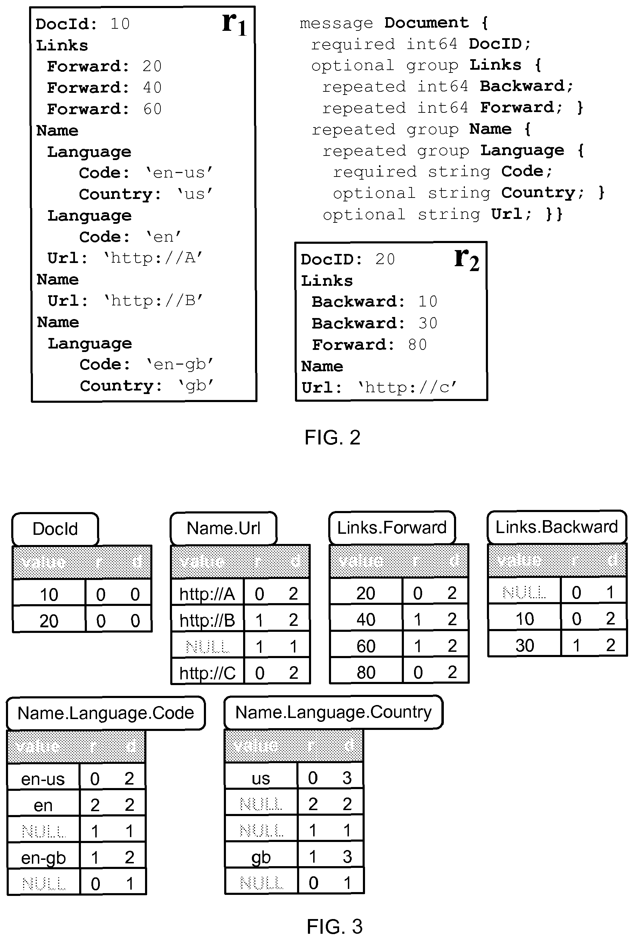

As an illustration, Figure 2 depicts a schema that defines a record type 'Document,' which represents a web document. The schema definition uses the Protocol Buffers syntax. A 'Document' has a required integer 'DocId' and optional 'Links,' containing a list of 'Forward' and 'Backward' entries holding 'DocIds' of other web pages. A 'Document' can have multiple 'Names,' which are different URLs by which the document can be referenced. A 'Name' contains a sequence of 'Code' and (optional) 'Country' pairs. Figure 2 also shows two sample records, r1 and r2, that conform to the schema. The record structure is outlined using indentation. The sample records r1 and R2 in Figure 2 are used explain the algorithms throughout this document. The fields defined in the schema form a tree hierarchy. The full path of a nested field is denoted using a dotted notation, e.g., Name.Language.Code is the full path name for the 'Code' field depicted in Figure 2.

The nested data model backs a platform-neutral, extensible mechanism for serializing structured data. Code generation tools produce bindings for different programming languages such as C++ or Java. Cross-language interoperability is achieved using a standard binary on-the-wire representation of records, in which field values are laid out sequentially as they occur in the record. This way, a MapReduce program written in Java can consume records from a data source exposed via a C++ library. Thus, if records are stored in a columnar representation, assembling them fast may assist interoperation with MapReduce and other data processing tools.

SECTION 4: NESTED COLUMNAR STORAGE

As illustrated in Figure 1, a goal is to store all values of a given field consecutively to improve retrieval efficiency. In this section, the challenges of lossless representation of record structure in a columnar format (Section 4.1), fast encoding (Section 4.2), and efficient record assembly (Section 4.3) are addressed.

SECTION 4.1: REPETITION AND DEFINITION LEVELS

A consecutive list of values alone does not convey the structure of a record. Given two values of a field that is repeated in a record, a system may not be able to determine at what 'level' the value is repeated (e.g., whether the two values are from different records or are from the same record). Likewise, if an optional field is missing from a record, values alone may not convey which enclosing records were defined explicitly and which were not. The concepts of repetition and definition levels are thus introduced. Figure 3 includes tables that summarize the repetition and definition levels for atomic fields in the sample records that are depicted in Figure 1.

Repetition Levels. Consider the field 'Code' in Figure 2. It occurs three times in record 'r1.' Occurrences 'en-us' and 'en' are inside the first 'Name' field, while 'en-gb' is in the third 'Name' field. To disambiguate these occurrences in the columnar structure, a repetition level is attached to each value that is to be stored in the columnar structure. The repetition level indicates at what repeated field in the field's path the value has repeated. For example, the field path Name.Language.Code contains two fields that are repeated, 'Name' and 'Language.' Hence, the repetition level of Code ranges between 0 and 2. Level 0 denotes the start of a new record, level 1 denotes a recent repetition at the 'Name' field, and level 2 denotes a recent repetition at the 'Language' field.

As an illustration of determining the level for a field, record 'r1' may be scanned from the top down. The value 'en-us' is first encountered and a check may be performed to identify the field in the Name.Language.Code path that has most recently repeated in the record. In this example, none of the fields have been repeated and thus, the repetition level is 0. The value 'en' is next encountered for the Name.Language.Code path and the field 'Language' is identified as the field that has most recently repeated. For example, scanning upwards from the value 'en,' the first field in the Name.Language.Code path that repeats is 'Language.' Thus, the repetition level is 2 (e.g., because '2' corresponds to the 'Language' field because 'Language' is the second field in the Name.Language.Code path that repeats). Finally, when the value 'en-gb' is encountered, the field 'Name' has repeated most recently (the 'Language' field occurred only once after Name), so the repetition level is 1. In other words, the repetition level for a value may be a number that represents a most recently repeated field. Thus, the repetition levels of Code values in record 'r1' are 0, 2, 1.

Notice that the second 'Name' field in record 'r1' does not contain any values for the field 'Code.' To determine that 'en-gb' occurs as a value for a field nested within the third instance of the field 'Name,' and not in the second instance, a NULL value is added between the values 'en' and 'en-gb' as they are stored in the columnar structure (*see* Figure 3). 'Code' is a required child field of the 'Language' field, so the fact that a value for the 'Code' field is missing implies that the 'Language' field is not also not defined. In general though, determining the level up to which nested records exist may require additional information.

Definition Levels. Each value of a field with path 'p,' especially every NULL value, has a 'definition level' that specifies how many fields in the path 'p' that could be undefined (e.g., because the fields are optional or repeated) are actually present in the record. To illustrate, observe that record 'r1' has no 'Backward' fields for the 'Links' field. Still, the field 'Links' is defined (at a level of 1). To preserve this information, a NULL value with definition level of 1 is added to the 'Links.Backward' column.

In other words, specifying a level of 1 for the 'Links.Backward' path indicates that '1' field that was optional or repeated (i.e., the 'Links' field) was defined in a path that includes two fields that are optional or repeated (i.e., the 'Links' field and the 'Backward' field). Thus, a definition of '1' indicates that the 'Backward' field was not instantiated. Similarly, the missing occurrence of 'Name.Language.Country' in record 'r2' carries a definition level 1, while its missing occurrences in record 'r1' have definition levels of 2 (inside 'Name.Language') and 1 (inside 'Name'), respectively. The encoding procedure outlined above may preserve the record structure losslessly.

Encoding. As stored in memory, each column that corresponds to a particular field may be stored with a header that includes a contiguous listing of repetition and definition values, followed by a contiguous listing of the substantive values. Each repletion and definition value may be stored as bit sequences (e.g., in a single byte). For example, the first four bits of a byte may be used to represent the repetition level for a particular value and the last four bits may be used to represent the definition level. In some examples, the header may include definitions of lengths of the number of bits so that delimiters may not be used. Thus, bits may only be used as necessary. For example, if the maximum definition level is 3, two bits per definition level may be used.

Thus, a representation of columnar data for a single field (e.g., the 'Name.Language.Code' field) may be stored in memory with a sequence of bytes representing the repetition and definition levels for a corresponding sequence of values, followed by a sequence of values. NULL values, however, may not be stored explicitly as they may be determined by analyzing the definition levels. For instance, any definition level that is smaller than the number of repeated and optional fields in a field's path can denote a NULL. Thus, a system may be able to determine where in the listing of consecutive values a NULL value should be inserted or inferred. In some examples, definition levels are not stored for values that are always defined. Similarly, repetition levels may only be stored if required. For example, a definition level of 0 implies a repetition level of 0, so the latter may be omitted. In fact, referencing the structures illustrated in Figure 3, no levels may stored for the 'DocId' field.

A representation of columnar data in memory may be broken up into a set of blocks. Each block may include a header that includes the repetition and definition level information, and a subsequent listing of the values for the field. Each header may include a 'constraint' value that indicates an allowable range of values in the block. Thus, the described system may identify which blocks include data that the system is interested in. The constraint can also indicate other properties of the values, e.g., whether the values have been sorted. In general, the 'constraint' may be thought of as an 'assertion' about what kind of values are found in the block. Each block may be compressed.

SECTION 4.2: SPLITTING RECORDS INTO COLUMNS

The above description presented an encoding of the record structure in a columnar format. A challenge is how to produce column stripes with repetition and definition levels efficiently. The base algorithm for computing repetition and definition levels is provided below. The algorithm recurses into the record structure and computes the levels for each field value. As illustrated earlier, repetition and definition levels may need to be computed even if field values are missing. Many datasets are sparse and it may not be uncommon to have a schema with thousands of fields, only a hundred of which are used in a given record. Hence, it may be beneficial to process missing fields as cheaply as possible. To produce column stripes, a tree of field writers is created, whose structure matches the field hierarchy in the schema. The basic idea is to update field writers only when they have their own data, and not try to propagate parent state down the tree unless absolutely necessary. To do that, child writers inherit the levels from their parents. A child writer synchronizes to its parent's levels whenever a new value is added.

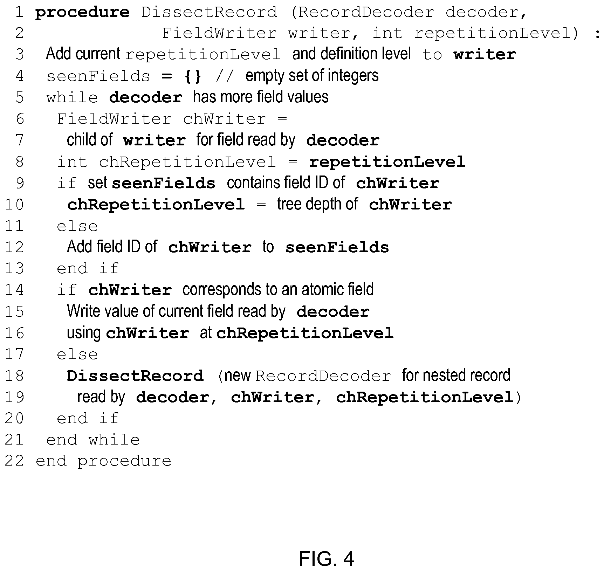

An example algorithm for decomposing a record into columns is shown in Figure 4. Procedure 'DissectRecord' is passed an instance of a 'RecordDecoder,' which is used to traverse binary-encoded records. 'FieldWriters' form a tree hierarchy isomorphic to that of the input schema. The root 'FieldWriter' is passed to the algorithm for each new record, with 'repetitionLevel' set to 0. The primary job of the 'DissectRecord' procedure is to maintain the current 'repetitionLevel.' The current 'definitionLevel' is uniquely determined by the tree position of the current writer, as the sum of the number of optional and repeated fields in the field's path.

The while-loop of the algorithm (Line 5) iterates over all atomic and record-valued fields contained in a given record. The set seenFields' tracks whether or not a field has been seen in the record. It is used to determine what field has repeated most recently. The child repetition level 'chRepetitionLevel' is set to that of the most recently repeated field or else defaults to its parent's level (Lines 9-13). The procedure is invoked recursively on nested records (Line 18).

The document above referenced 'FieldWriters' accumulating levels and propagating them lazily to lower-level writers. This may be performed by each non-leaf writer keeping a sequence of (repetition, definition) levels. Each writer also has a 'version' number associated with it. Simply stated, a writer version is incremented by one whenever a level is added. It is sufficient for children to remember the last parent's version they synced. If a child writer ever gets its own (non-null) value, it synchronizes its state with the parent by fetching new levels, and only then adds the new data.

Because input data may have thousands of fields and millions records, it may not be feasible to store all levels in memory. Some levels may be temporarily stored in a file on disk. For a lossless encoding of empty (sub)records, non-atomic fields (such as Name.Language in Figure 2) may need to have column stripes of their own, containing only levels but no non-NULL values.

SECTION 4.3: RECORD ASSEMBLY

Assembling records (e.g., records 'r1' and 'r2') from columnar data efficiently is critical for record-oriented data processing tools (e.g., Map Reduce). Given a subset of fields, a goal is to reconstruct the original records as if they contained just the selected fields, with all other fields stripped away. The key idea is to create a finite state machine (FSM) that reads the field values and levels for each field, and appends the values sequentially to the output records.

An FSM state corresponds to a field reader for each selected field. State transitions are labeled with repetition levels. Once a reader fetches a value, the next repetition level is looked at to decide what next reader to use. The FSM is traversed from the start to end state once for each record.

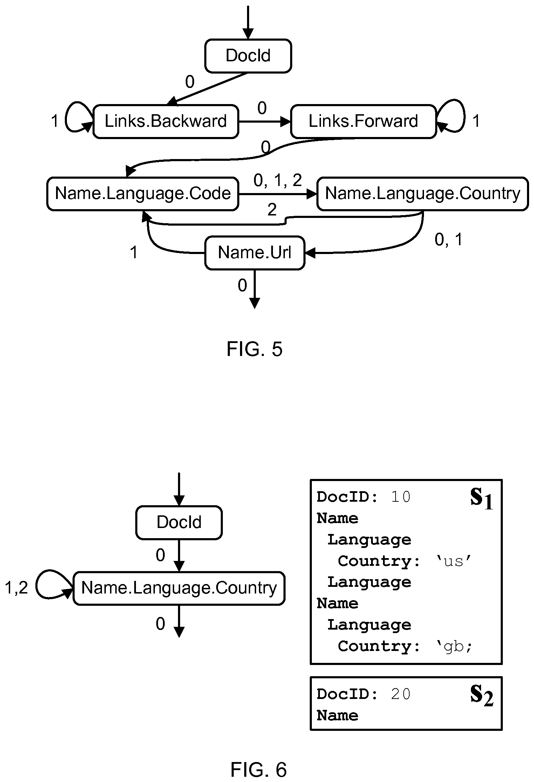

Figure 5 shows an FSM that reconstructs the complete records in our running example using as input the blocks described in Section 4.1. In this example, the nodes are labeled with fields and the edges are labeled with repetition levels. The start state is 'DocId.' Once a 'DocId' value is read, the FSM transitions to the 'Links.Backward' state. After all repeated 'Backward' values have been drained, the FSM jumps to 'Links.Forward,' etc.

To sketch how FSM transitions are constructed, let 'l' be the next repetition level returned by the current field reader for field 'f.' Starting at 'f' in the schema tree (e.g., the schema in Figure 2), its ancestor is found that repeats at level 'l' and select the first leaf field 'n' inside that ancestor. This provides an FSM transition ('f'; 'l') $\rightarrow$ n. For example, let 'l' = 1 be the next repetition level read by 'f' = 'Name.Language.Country.' Its ancestor with repetition level '1' is Name, whose first leaf field is 'n' = 'Name.Url.'

If only a subset of fields need to be retrieved, a simpler FSM that is cheaper to execute may be constructed. Figure 6 depicts an FSM for reading the fields 'DocId' and 'Name.Language.Country.' The figure shows the output records 's1' and 's2' produced by the automaton. Notice that the encoding and the assembly algorithm preserve the enclosing structure of the field 'Country.' This may be important for applications that need to access, e.g., the Country appearing in the first Language of the second Name. In XPath, this may correspond to the ability to evaluate expressions like /Name[2]/Language[1]/Country.

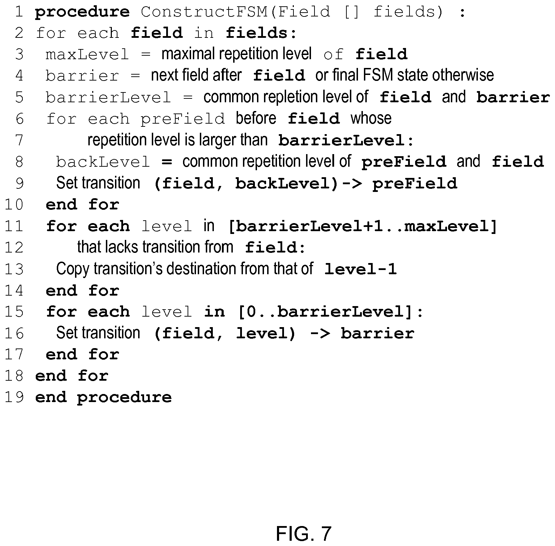

Construct FSM Procedure. Figure 7 shows an algorithm for constructing a finite-state machine that performs record assembly. The algorithm takes as input the fields that should be populated in the records, in the order in which they appear in the schema. The algorithm uses a concept of a 'common repetition level' of two fields, which is the repetition level of their lowest common ancestor. For example, the common repetition level of 'Links.Backward' and 'Links.Forward' equals 1. The second concept is that of a 'barrier', which is the next field in the sequence after the current one. The intuition is that each field is attempted to be processed one by one until the barrier is hit and requires a jump to a previously seen field.

The algorithm consists of three steps. In Step 1 (Lines 6-10), the common repetition levels are processed backwards. These are guaranteed to be non-increasing. For each repetition level encountered, the left-most field in the sequence is picked-that is the field that is to be transitioned to when that repetition level is returned by a 'FieldReader.' In Step 2, the gaps are filled (Lines 11-14). The gaps arise because not all repetition levels are present in the common repetition levels computed at Line 8. In Step 3 (Lines 15-17), transitions for all levels are set that are equal to or below the barrier level to jump to the barrier field. If a 'FieldReader' produces such a level, the nested record may continue to be constructed and there may be no need to bounce off the barrier.

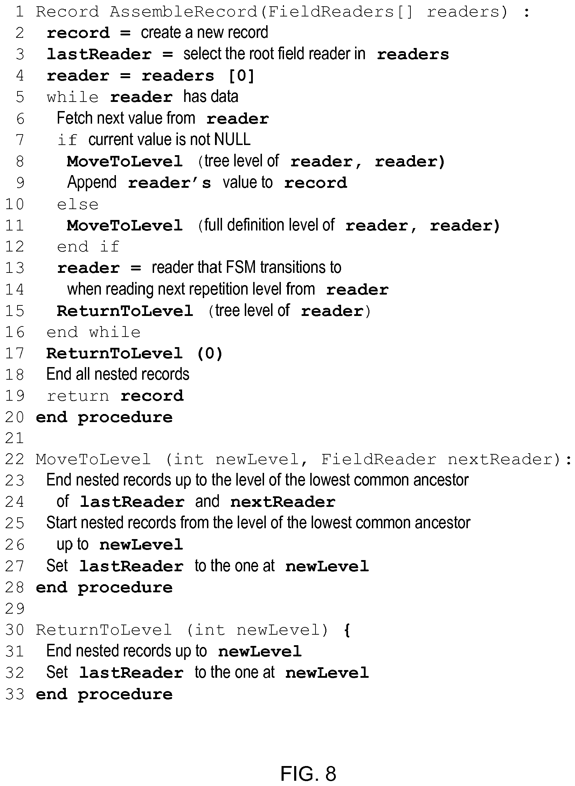

Assemble Record Procedure. An Assemble Record procedure (illustrated in Figure 8) takes as input a set of 'FieldReaders' and (implicitly) the FSM with state transitions between the readers. In other words, the algorithm operates on an FSM and columnar data and outputs constructed records. Variable reader holds the current 'FieldReader' in the main routine (Line 4). Variable Reader holds the last reader whose value is appended to the record and is available to all three procedures shown in Figure 7. The main while-loop is at Line 5. The next value is fetched from the current reader. If the value is not NULL, which is determined by looking at its definition level, the record being assembled is synchronized to the record structure of the current reader in the method 'MoveToLevel,' and the field value is appended to the record. Otherwise, the record structure may be adjusted without appending any value-which may be done if empty records are present. On Line 12, a 'full definition level' is used. Recall that the definition level factors out required fields (only repeated and optional fields are counted). Full definition level takes all fields into account.

Procedure 'MoveToLevel' transitions the record from the state of the 'lastReader' to that of the 'nextReader' (see Line 22). For example, suppose the 'lastReader' corresponds to 'Links. Backward' in Figure 2 and 'nextReader' is 'Name.Language.Code.' The method ends the nested record Links and starts new records Name and Language, in that order. Procedure 'ReturnsToLevel' (Line 30) is a counterpart of 'MoveToLevel' that only ends current records without starting any new ones.

In their on-the-wire representation, records are laid out as pairs of a field identifier followed by a field value. Nested records can be thought of as having an 'opening tag' and a 'closing tag', similar to XML (actual binary encoding may differ). A description of 'starting' a record refers to writing opening tags, while 'ending' a record refers to writing closing tags.

SECTION 5: QUERY LANGUAGE

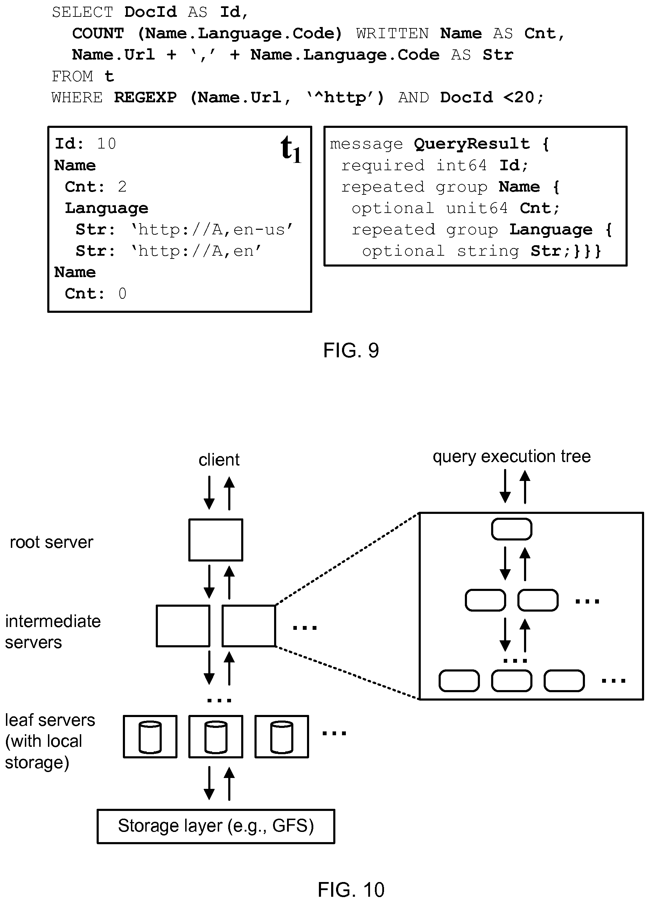

The described system may employ a query language that is based on SQL and is designed to be efficiently implementable on columnar nested storage. Aspects of the query language are described herein. Each SQL-like statement (and algebraic operators it translates to) takes as input one or multiple nested tables (e.g., a set of compressed blocks of columnar data that represents a table, as described in Section 4.1) and their schemas, and produces a nested table (e.g., a modified instance of the columnar data) and its output schema. Figure 9 depicts a sample query that performs projection, selection, and within-record aggregation. The query is evaluated over the table t = {r1, r2} from Figure 2. The fields are referenced using path expressions. The query produces a nested result although no record constructors are present in the query.

To explain what the query does, consider the selection operation (the WHERE clause). Think of a nested record as a labeled tree, where each label corresponds to a field name. The selection operator prunes away the branches of the tree that do not satisfy the specified conditions. Thus, only those nested records are retained where 'Name.Url' is defined and starts with 'http.' Next, consider projection. Each scalar expression in the SELECT clause emits a value at the same level of nesting as the most-repeated input field used in that expression. So, the string concatenation expression emits 'Str' values at the level of 'Name.Language.Code' in the input schema.

The COUNT expression illustrates within-record aggregation. The aggregation is done WITHIN each 'Name' subrecord, and emits the number of occurrences of 'Name.Language.Code' for each 'Name' as a non-negative 64-bit integer (uint64). Thus, the WITHIN statement enables intra-row aggregation. In other words, records of the same name may be aggregated in a same record or beneath a same child. In contrast, SQL, which may not be able to operate on nested data, may be unable to operate on intra-row records.

The language supports nested subqueries, inter and intra-record aggregation, top-k, joins, user-defined functions, etc. Some of these features are discussed in the experimental section. As one additional example, the described query language includes an OMIT IF statement that can filter an intra-row group of values. For example, each of thousands of records may include several repeated 'Cost' fields that each includes a numerical value. A user of the query language may want to throw out all records where a sum of the values in the fields exceeds the number '20.' Thus, the user may employ an OMIT IF statement to generate a list of the records where the summed 'Cost' in each record is twenty or less.

SECTION 6: QUERY EXECUTION

<u>Tree Architecture</u>. The described system uses a multi-level serving tree to execute queries (see Figure 10). A root server receives incoming queries, reads metadata from the tables, and routes the queries to the next level in the serving tree. The leaf servers communicate with the storage layer or access the data on local disk. Many of the queries that operate in the described system are single-scan aggregations; therefore, this document focuses on explaining those and uses them for experiments in the next section. Consider a simple aggregation query below:

SELECT A, COUNT(B) FROM T GROUP BY A

When the root server receives the above query, it determines all tablets, i.e., horizontal partitions of the table, that comprise the table 'T' and rewrites the query as follows:

SELECT A, SUM(c) FROM $(R_1^1 \text{ UNION ALL } ... R_n^1)$ GROUP BY A

Tables $R_1^1 \text{ UNION ALL } ... R_n^1$ are the results of queries sent to the nodes 1, ... , n at level 1 of the serving tree:

$$R_i^1) = \text{SELECT A, COUNT(B) AS c FROM } T_i^1 \text{ GROUP BY A}$$

$T_i^1$ is a disjoint partition of tablets in 'T' processed by server 'I' at level '1.' Each serving level performs a similar rewriting. Ultimately, the queries reach the leaves, which scan the tablets in 'T' in parallel. On the way up, intermediate servers perform a parallel aggregation of partial results. The execution model presented above is well suited for aggregation queries returning small and medium-sized results, which are a very common class of interactive queries.

<u>Query Dispatcher</u>. The described system is a multi-user system, e.g., several queries may be executed simultaneously. A query dispatcher schedules queries based on their priorities and balances the load. Another role is to provide fault tolerance when one server becomes much slower than others or a tablet replica becomes unreachable.

The amount of data processed in each query is often larger than the number of processing units available for execution, which are called slots. A slot corresponds to an execution thread on a leaf server. For example, a system of 3,000 leaf servers each using 8 threads has 24,000 slots. So, a table spanning 100,000 tablets can be processed by assigning about 5 tablets to each slot. During query execution, the query dispatcher computes a histogram of tablet processing times. If a tablet takes a disproportionately long time to process, the system reschedules the tablet on another server. Some tablets may need to be redispatched multiple times.

The leaf servers read stripes of nested data in columnar representation. The blocks in each stripe are prefetched asynchronously; the read-ahead cache typically achieves hit rates of 95%. Tablets are usually three-way replicated. When a leaf server cannot access one tablet replica, it falls over to another replica.

The query dispatcher honors a parameter that specifies the minimum percentage of tablets that must be scanned before returning a result. As described below, setting such parameter to a lower value (e.g., 98% instead of 100%) can often speed up execution significantly, especially when using smaller replication factors.

Each server may have an internal execution tree, as depicted on the right-hand side of Figure 7. The internal tree corresponds to a physical query execution plan, including evaluation of scalar expressions. Optimized, type-specific code is generated for most scalar functions. A basic execution plan consists of a set of iterators that scan input columns in lockstep and emit results of aggregates and scalar functions annotated with the correct repetition and definition levels, bypassing record assembly entirely during query execution.

Some queries by the described system, such as top-k and count-distinct, return approximate results using well-known single-scan algorithms.

SECTION 7: EXPERIMENTAL DATA

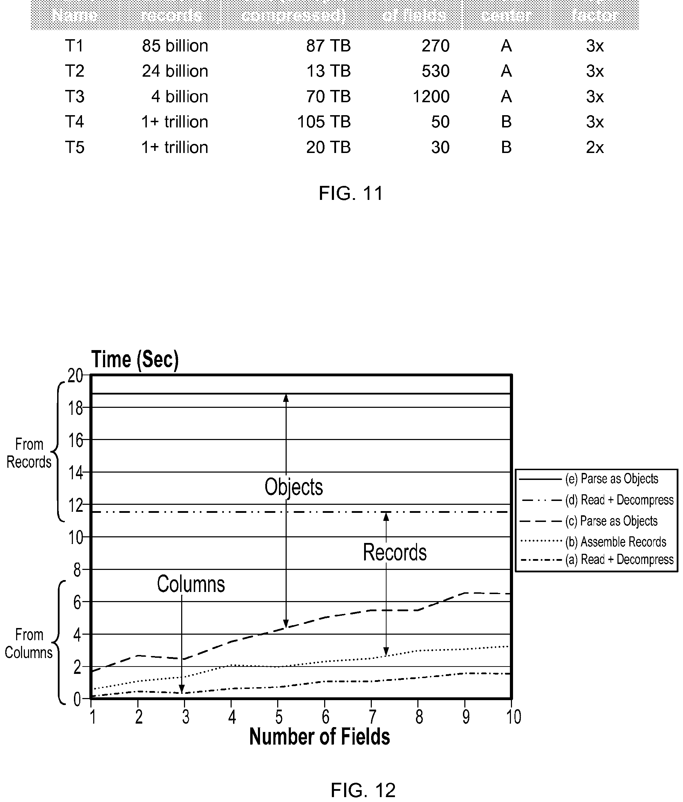

This section presents an experimental evaluation of the described system on several datasets, and examines the effectiveness of columnar storage for nested data. The properties of the datasets used in the study are summarized in Figure 11. In uncompressed, non-replicated form the datasets occupy about a petabyte of space. All tables are three-way replicated, except one two-way replicated table, and contain from 100K to 800K tablets of varying sizes. This section begins by examining the basic data access characteristics on a single machine, then show how columnar storage benefits MapReduce execution, and finally focus on the described system's performance. The experiments were conducted on system instances running in two data centers next to many other applications, during regular business operation. Table and field names used below are anonymized.

Local Disk. In the first experiment, performance tradeoffs of columnar vs. record-oriented storage were examined by scanning a 1GB fragment of table T1 containing about 300K rows (see Figure 12). The data is stored on a local disk and takes about 375MB in compressed columnar representation. The record-oriented format uses heavier compression yet yields about the same size on disk. The experiment was done on a dual-core Intel machine with a disk providing 70MB/s read bandwidth. All reported times are cold; OS cache was flushed prior to each scan.

Figure 12 shows five graphs, illustrating the time it takes to read and uncompress the data, and assemble and parse the records, for a subset of the fields. Graphs (a)-(c) outline the results for columnar storage. Each data point in these graphs was obtained by averaging the measurements over 30 runs, in each of which a set of columns of a given cardinality was chosen at random. Graph (a) shows reading and decompression time. Graph (b) adds the time needed to assemble nested records from the columns. Graph (c) shows how long it takes to parse the records into strongly typed C++ data structures.

Graphs (d)-(e) depict the time for accessing the data on record-oriented storage. Graph (d) shows reading and decompression time. A bulk of the time is spent in decompression; in fact, the compressed data can be read from the disk in about half the time. As Graph (e) indicates, parsing adds another 50% on top of reading and decompression time. These costs are paid for all fields, including the ones that are not needed.

When few columns are read, the gains of columnar representation may be about an order of magnitude. Retrieval time for columnar nested data may grow linearly with the number of fields. Record assembly and parsing may be expensive, each potentially doubling the execution time. Similar trends were observed on other datasets. A natural question to ask is where the top and bottom graphs cross, i.e., record-wise storage starts outperforming columnar storage. In experience, the crossover point may lie at dozens of fields but varies across datasets and depends on whether or not record assembly is required.

Map Reduce and the Described System. Next an execution of MapReduce and the described system are illustrated on columnar vs. record-oriented data. In this case, a single field is accessed and the performance gains are the most pronounced. Execution times for multiple columns can be extrapolated using the results of Figure 12. In this experiment, the average number of terms in a field 'txtField' of table 'T1' is counted. MapReduce execution is done using the following Sawzall program:

```
numRecs: table sum of int;
numWords: table sum of int;
emit numRecs <- 1;
emit numWords <- CountWords(input.txtField);
```

The number of records is stored in the variable 'numRecs.' For each record, 'numWords' is incremented by the number of terms in 'input.txtField' returned by the 'CountWords' function. After the program runs, the average term frequency can be computed as numWords=numRecs. In SQL, this computation is expressed as:

$Q_1$: SELECT SUM(CountWords(textile))/COUNT(*)FROM T1

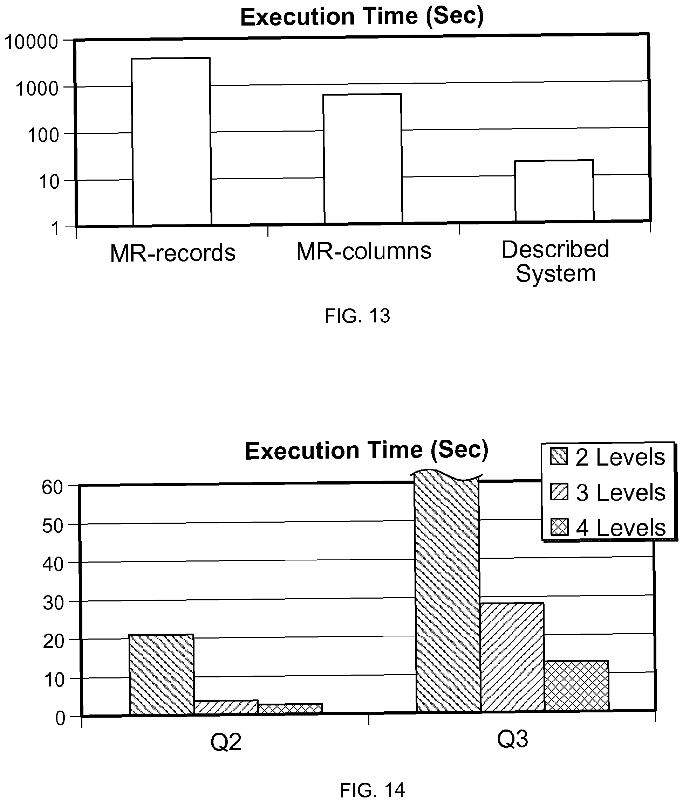

Figure 13 shows the execution times of two MapReduce jobs and the described system on a logarithmic scale. Both MapReduce jobs are run on 3000 workers (e.g., servers). Similarly, a 3000-node instance of the present system is used to execute Query $Q_1$. The described system and MapReduce-on-columns read about 0.5TB of compressed columnar data vs. 87TB read by MapReduce-on-records. As Figure 12 illustrates, MapReduce gains an order of magnitude in efficiency by switching from record-oriented to columnar storage (from hours to minutes). Another order of magnitude is achieved by using the described system (going from minutes to seconds).

Serving tree topology. In the next experiment, the impact of the serving tree depth on query execution times is illustrated. Two GROUP BY queries are performed on Table T2, each executed using a single scan over the data. Table T2 contains 24 billion nested records. Each record has a repeated field item containing a numeric amount. The field item.amount repeats about 40 billion times in the dataset. The first query sums up the item amount by country:

$Q_2$: SELECT country, SUM(item.amount) FROM T2
GROUP BY country

It returns a few hundred records and reads roughly 60GB of compressed data from disk. The next query performs a GROUP BY on a text field domain with a selection condition. It reads about 180GB and produces around 1.1 million distinct domains:

$Q_3$: SELECT domain, SUM(item.amount) FROM T2
WHERE domain CONTAINS '.net'
GROUP BY domain

Figure 14 shows the execution times for each query as a function of the server topology. In each topology, the number of leaf servers is kept constant at 2900 so that the same cumulative scan speed may be assumed. In the 2-level topology (1:2900), a single root server communicates directly with the leaf servers. For 3 levels, a 1:100:2900 setup is used, i.e., an extra level of 100 intermediate servers. The 4-level topology is 1:10:100:2900.

Query $Q_2$ runs in 3 seconds when 3 levels are used in the serving tree and does not benefit much from an extra level. In contrast, the execution time of $Q_3$ is halved due to increased parallelism. At 2 levels, $Q_3$ is off the chart, as the root server needed to aggregate near-sequentially the results received from thousands of nodes. This experiment illustrates how aggregations returning many groups may benefit from multi-level serving trees.

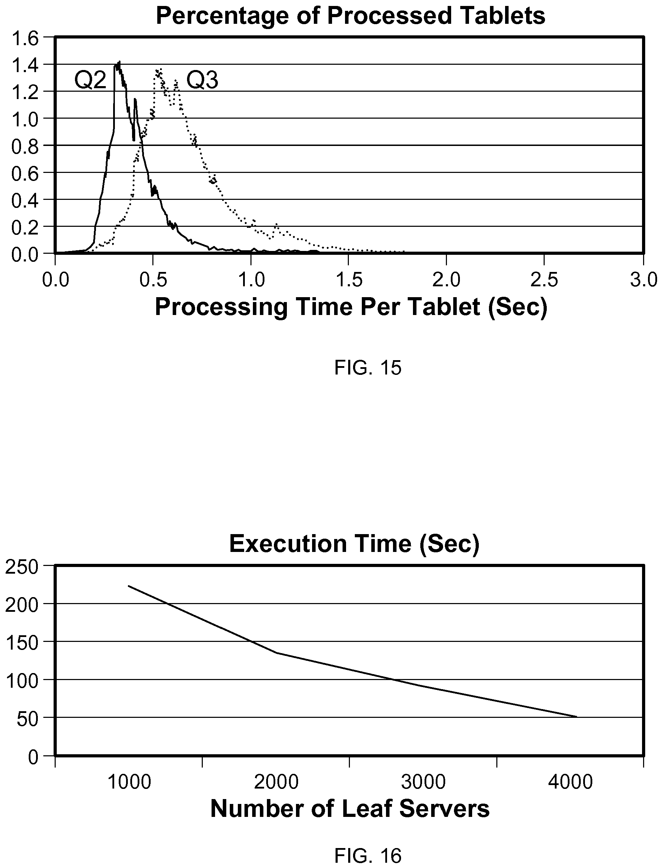

Per-tablet Histograms. The Figure 15 shows how fast tablets get processed by the leaf servers for a specific run of $Q_2$ and $Q_3$. The time is measured starting at the point when a tablet got scheduled for execution in an available slot, i.e., excludes the time spent waiting in the job queue. This measurement methodology factors out the effects of other queries that are executing simultaneously. The area under each histogram corresponds to 100%. As Figure 15 indicates, 99% of $Q_2$ (or $Q_3$) tablets are processed under one second (or two seconds).

Within-record Aggregation. As another experiment, the performance of Query $Q_4$ is examined when run on Table T3. The query illustrates within-record aggregation: it counts all records where the sum of a.b.c.d values occurring in the record are larger than the sum of a.b.p.q.r values. The fields repeat at different levels of nesting. Due to column striping only 13GB (out of 70TB) are read from disk and the query completes in 15 seconds. Without support for nesting, running this query on T3 would be expensive.

$Q_4$: SELECT COUNT(c1 > c2) FROM
(SELECT SUM(a.b.c.d) WITHIN RECORD AS c1, SUM(a.b.p.q.r)
WITHIN RECORD AS c2 FROM T3)

Scalability. The following experiment illustrates the scalability of the system on a trillion-record table. Query $Q_5$ shown below selects top-20 aid's and their number of occurrences in Table T4. The query scans 4.2TB of compressed data.

$Q_5$: SELECT TOP(aid, 20), COUNT(*) FROM T4
WHERE bid = {value1} AND cid = {value2}

The query was executed using four configurations of the system, ranging from 1000 to 4000 nodes. The execution times are in Figure 16. In each run, the total expended CPU time is nearly identical, at about 300K seconds, whereas the user-perceived time decreases near-linearly with the growing size of the system. This result suggests that a larger system can be just as effective in terms of resource usage as a smaller one, yet allows faster execution.

Stragglers. Stragglers may be tasks (e.g., processing a tablet) that are not performed, for example, because the machine performing the task has an operational problem or the machine is not being aggressive enough in handling the task given higher-priority tasks. Query $Q_6$ below is run on a trillion-row table T5. In contrast to the other datasets, T5 is two-way replicated. Hence, the likelihood of stragglers slowing the execution is higher since there are fewer opportunities to reschedule the work.

$Q_6$: SELECT COUNT(DISTINCT a) FROM T5

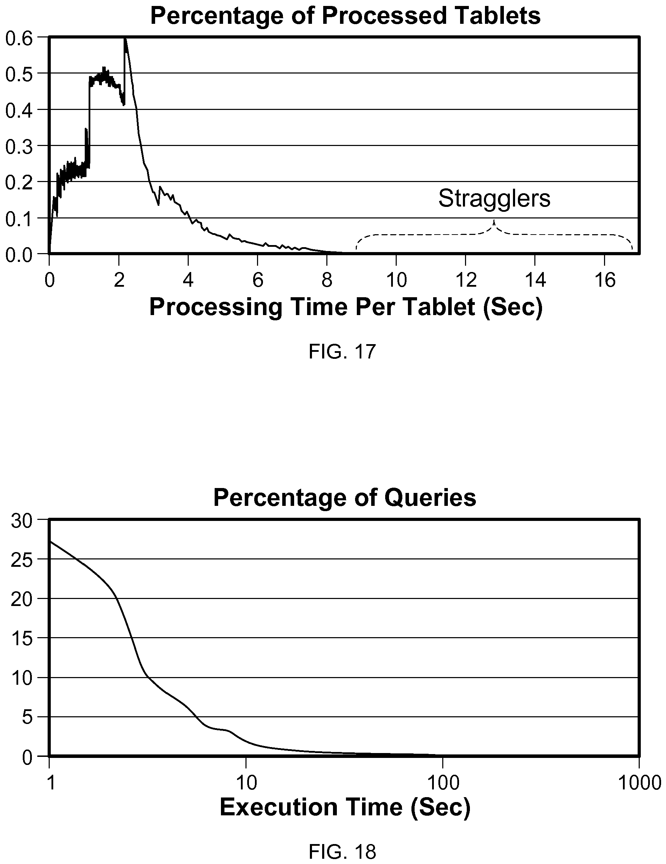

Query $Q_6$ reads over 1TB of compressed data. The compression ratio for the retrieved field is about 10. As indicated in Figure 17, the processing time for 99% of the tablets is below 5 seconds per tablet per slot. However, a small fraction of the tablets take a lot longer, slowing down the query response time from less than a minute to several minutes, when executed on a 2500 node system. The next section summarizes experimental findings.

SECTION 8: OBSERVATIONS

Figure 18 shows the query response time distribution in a typical monthly workload of the described system, on a logarithmic scale. As Figure 18 indicates, most queries are processed under 10 seconds, well within the interactive range. Some queries have achieved a scan throughput close to 100 billion records per second in a busy cluster, and even higher on dedicated machines. The experimental data presented above suggests the following observations:

- Scan-based queries can be executed at interactive speeds on disk-resident datasets of numerous records;
- Near-linear scalability in the number of columns and servers may be achievable for systems containing thousands of nodes;
- MapReduce can benefit from columnar storage just like a DBMS;
- Record assembly and parsing are expensive. Software layers (beyond the query processing layer) may be optimized to directly consume column-oriented data;
- MapReduce and query processing can be used in a complementary fashion, one layer's output can feed another's input;
- In a multi-user environment, a larger system can benefit from economies of scale while offering a qualitatively better user experience;
- If trading speed against accuracy is acceptable, a query can be terminated much earlier and yet see most of the data; and
- The bulk of a web-scale dataset can be scanned fast, although getting to the last few percent may increase the amount of processing time.

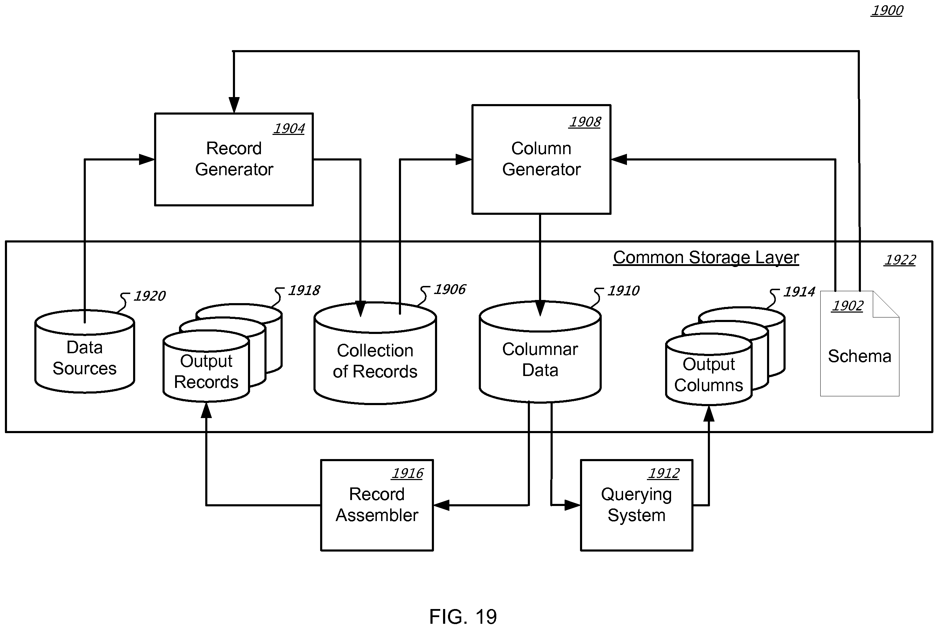

Figure 19 is a block diagram of a system for generating and processing columnar storage representations of nested records. The record generator 1904 generates records of nested data from data sources 1920 and a schema 1902. The column generator 1908 receives as input the records 1906 and the schema 1902 and outputs column stripes that represent the data in the records 1906, but in a columnar format. The columnar data 1910 may be queried *in situ* by the querying system 1912 in order to produce different sets of output columns 1914. The columnar data 1910 may also be assembled back into record form by the record assembler 1916. The records 1918 that are output by the record assembler may each include a sub-set of fields from the original records in the collection 1906. The output records 1918 may be operated on by a record-based data analysis program (e.g., MapReduce).

More specifically, the data sources 1920 may include substantially unstructured data. Substantially unstructured indicates that the data may include elements that denote structure, but the entire spectrum of information may not be similarly structured. As an illustration, the data sources 1920 may include the source code for each of millions of websites. Although each website includes some degree of structure, the content of each website is not generated based on a common schema. Standards may generally govern a format of the site, but content and placement of fields is not specified among each and every website by a single schema. In some examples, the information in data sources 1920 is not stored in the common storage layer 1922, but is pulled directly from external sources on the internet.

The schema 1902 defines a common structuring for information that may be contained in the data sources. As described earlier in this document, the schema 1902 can require certain fields of information and may permit other fields of information to be stored as optional.

The record generator 1904 receives as input the schema 1902 and information from the data sources 1920. The record generator 1904 takes the information from the data sources 1920 and structures all or portions of the information into individual instances of records that comply with the schema 1902. For example, while the data sources 1920 may include substantially unstructured data from web pages, the record generator 1904 may select pieces of information from each web page to include for particular records 1906.

Thus, each of the records 1906 may include data that is structured according to the schema 1902. The structured data may include fields, which may denote a semantics of data values and a structural relationship of the data values. Accordingly, the schema may be referenced to obtain additional definition information for the data value (e.g., what the digitally stored data value represents in the real world or on a web page and relationships to other values).

Each record 1906 may include nested fields and data values. A nested record may include more than one field of the same name or path. The fields with the same name or path, however, can be structurally located in different locations in a particular record. For example, a single field that is defined by the schema may be able to repeat multiple times. Further, fields may have children fields (i.e., nested fields). Thus, at a top level of a record a particular field may repeat, and each repetition of the field may or may not include a particular child field. In other words, the record may include instances of the child field in some portions of the record, but not in other portions of the records.

The collection of records 1906 may be translated into columnar data 1910 to speed up processing of information in the records. For example, if the amount of records in the collection 1906 numbers in the billions, and each record could include hundreds of different fields, an analysis of the records may be time-intensive where information on a small number of fields is desired. This is because each record in the collection 1906 is stored with other information from the record. That is, each record is grouped together in a consecutive portion of memory (e.g., as illustrated in the 'record-oriented' depiction of nested data in Figure 1).

In contrast, columnar data 1910 includes columns that each store information for a single field in the schema 1902 (e.g., as illustrated in the 'column-oriented' depiction of nested data in Figure 1). Thus, if the field is a byte long, the column for the field may be on the order of billions of bytes (e.g., one byte for each record) as opposed to billions of records (e.g., where each record may be a megabyte in size). The operations of the column generator 1908 are described in more detail in Section 4.2 "Splitting Records into Columns." The storage format for the columnar data 1910 is described in more detail in Section 4.1 "Repetition and Definition Levels."

The columnar data 1910 may be queried directly using the querying system 1912. In other words, the columnar data 1910 may be queried without loading the data into a database. The querying system, when executing a query, may receive as an input a table of columnar data. In some examples, the querying system also receives as input the schema 1902. The columnar stripes may be stored together with the schema to make the data self-describing. The querying system allows operations to be performed on the columnar data in order to generate columns of output information 1914. The output columns 1914 may include a subset of the values represented in the columnar data 1910, as determined by a particular query. In some examples, the querying system outputs records 1918 instead of, or in addition to, the columns 1914.

For example, the querying system 1912 may receive a first query and, in response, may parse through select columns of data and generate a set of output columns that provides a title of all web pages that have one or more videos and a number of the videos for each web page. The querying system may receive a second query and in response output a second set of output columns that provides a URL of every web page that was generated within the last fifteen minutes. Other information from the columns 1910 may not be included in a set of output columns that corresponds to a particular query 1914.

Data that is stored as columnar data 1910 may need to be accessed by an analytical service that does not operate on columnar data but operates on records. Thus, the record assembler 1916 may receive as input the columnar data and assemble records from the columnar data. The process of assembling records is described in more detail in Section 4.3 "Record Assembly."

Although the records may already be available in the collection 1906, the record assembler 1916 enables generating a set of records that includes a subset of the fields of the records in the collection 1906. For example, the records in the collection may include thousands of different fields. A user may want to run a record-oriented analysis program that only requires knowledge from two of the fields, but for all of the records. Thus, the record assembler 1916 may generate a set of records that only includes information on the requested fields. This way, multiple sets of output records 1918 can be developed for different analysis or for different analysis programs. An analysis on smaller records may be faster than an analysis that must traverse the larger records that may be found in collection 1906.

The above description of the operation of the system 1900 illustrates an example where the collection of records 1906 includes records that are formatted in accordance with the schema 1902, and where the columnar data 1910 is generated from this single set of similarly-structured data. In various examples, multiple schemas 1902 may be used to generate a collection of records that includes many sets of differently structured records 1906. Each record, however, may identify in a header the type of schema that was used in the record's generation. Similarly, a column stripe may be generated for each field in each of many sets of similarly-structured records. Each column stripe may indicate not only the name of the field, but also the schema from which the columnar data is associated (i.e., the schema used to format the records from which the columnar data was generated).

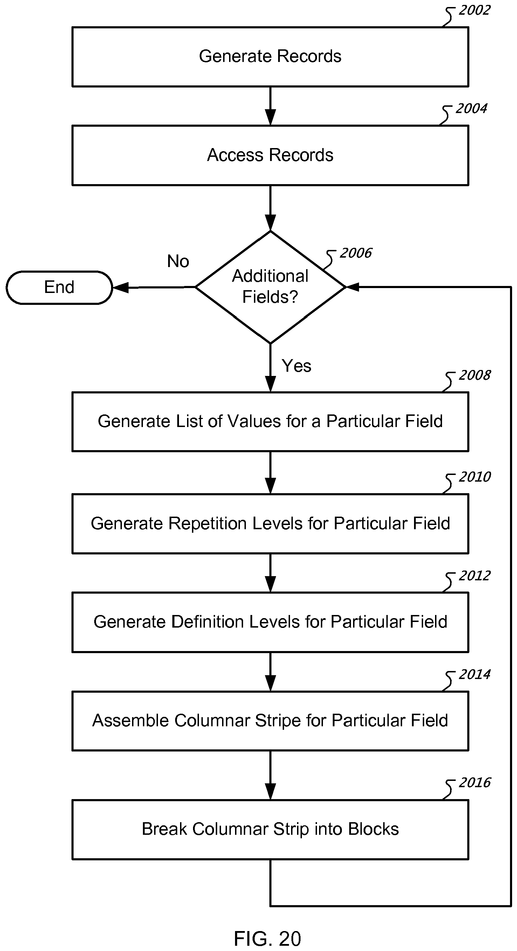

Figure 20 is a flow chart of an example process for generating columnar data. The process may be performed by components of the system 1900.

In box 2002, a set of records is generated. The generation of the records may be performed by the record generator 1904. Unstructured data (e.g., from data sources 1920) may be compiled into a standardized record format that is defined by schema 1902. The records may be stored in the collection 1906.

In box 2004, the records in the collection 1906 are accessed. For example, the column generator 1908 receives as input the data from the collection of records 1906.

In box 2006, a determination is made whether a column stripe is to be generated for an additional field. For example, a stripe is to be generated for each field in the set of records that are stored in the collection 1906 (and thus each record in the schema 1902 or a subset thereof). In this illustration, no stripes have been made so far, and thus there are fields for which a stripe is to be generated. Accordingly, the process proceeds to box 2008 in order to perform operations for a particular field. If all stripes had been generated (e.g., a stripe had been generated for every field in the collection of records 1906), the process may end.

In box 2008, a list of values for the particular is generated. For example, each of the records may be traversed and a list of values for the particular field is generated.

In box 2010, repetition levels for the particular field are generated. For example, the column generator 1908 may determine a repetition level for each of the values in the list by determining a most recently repeated field in the path for the field.

In box 2012, definition levels for the particular field are generated. For example, the column generator 1908 may determine a definition level for each value (including values that are 'missing,' as described in more detail above).

In box 2014, a columnar stripe is assembled for the particular field. In various examples, the repetition and definition levels are placed in paired groupings in the header of the stripe. The list of values may be placed in the body of the stripe.

In box 2016, the columnar stripe is broken into blocks that may be compressed. Each block may include a set of values and their corresponding repetition and definition levels. Subsequently, a determination in box 2006 of whether columnar stripes are to be generated for additional fields is performed. If no additional columnar stripes are to be generated, the process ends.

The process depicted in Figure 20 is an example process for generating columnar stripes. Variations on the process are contemplated. For example, the operations of the boxes may not be performed sequentially as depicted in the flowchart. Stripes for multiple fields may be generated at a single time. The repetition level and definition level may be generated as each value is obtained from a record. The columnar stripe may not be generated as a whole. Instead, each block may be generated from the stripe and independently compressed. Thus, the flowchart may represent a conceptual mechanism for understanding the generation of stripes, but is not intended to be limiting. A process for generating columnar data is depicted in the algorithm of Figure 4, which may not correspond to the operations described in relation to Figure 20.

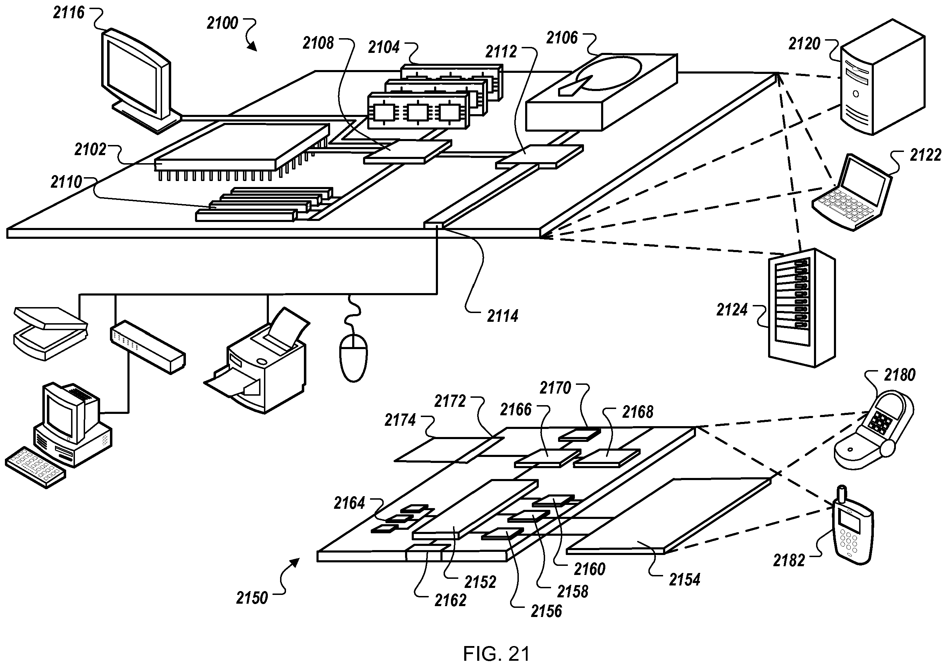

Figure 21 is a block diagram of computing devices 2100, 2150 that may be used to implement the systems and methods described in this document, as either a client or as a server or plurality of servers. Computing device 2100 is intended to represent various forms of digital computers, such as laptops, desktops, workstations, personal digital assistants, servers, blade servers, mainframes, and other appropriate computers. Computing device 2150 is intended to represent various forms of mobile devices, such as personal digital assistants, cellular telephones, smartphones, and other similar computing devices. Additionally computing device 2100 or 2150 can include Universal Serial Bus (USB) flash drives. The USB flash drives may store operating systems and other applications. The USB flash drives can include input/output components, such as a wireless transmitter or USB connector that may be inserted into a USB port of another computing device. The components shown here, their connections and relationships, and their functions, are meant to be exemplary only, and are not meant to limit implementations described and/or claimed in this document.

Computing device 2100 includes a processor 2102, memory 2104, a storage device 2106, a high-speed interface 2108 connecting to memory 2104 and high-speed expansion ports 2110, and a low speed interface 2112 connecting to low speed bus 2114 and storage device 2106. Each of the components 2102, 2104, 2106, 2108, 2110, and 2112, are interconnected using various busses, and may be mounted on a common motherboard or in other manners as appropriate. The processor 2102 can process instructions for execution within the computing device 2100, including instructions stored in the memory 2104 or on the storage device 2106 to display graphical information for a GUI on an external input/output device, such as display 2116 coupled to high speed interface 2108. In other implementations, multiple processors and/or multiple buses may be used, as appropriate, along with multiple memories and types of memory. Also, multiple computing devices 2100 may be connected, with each device providing portions of the necessary operations (e.g., as a server bank, a group of blade servers, or a multi-processor system).

The memory 2104 stores information within the computing device 2100. In one implementation, the memory 2104 is a volatile memory unit or units. In another implementation, the memory 2104 is a non-volatile memory unit or units. The memory 2104 may also be another form of computer-readable medium, such as a magnetic or optical disk.

The storage device 2106 is capable of providing mass storage for the computing device 2100. In one implementation, the storage device 2106 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 2104, the storage device 2106, or memory on processor 2102.

The high speed controller 2108 manages bandwidth-intensive operations for the computing device 2100, while the low speed controller 2112 manages lower bandwidth-intensive operations. Such allocation of functions is exemplary only. In one implementation, the high-speed controller 2108 is coupled to memory 2104, display 2116 (e.g., through a graphics processor or accelerator), and to high-speed expansion ports 2110, which may accept various expansion cards (not shown). In the implementation, low-speed controller 2112 is coupled to storage device 2106 and low-speed expansion port 2114. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 2100 may be implemented in a number of different forms, as shown in the figure. For example, it may be implemented as a standard server 2120, or multiple times in a group of such servers. It may also be implemented as part of a rack server system 2124. In addition, it may be implemented in a personal computer such as a laptop computer 2122. Alternatively, components from computing device 2100 may be combined with other components in a mobile device (not shown), such as device 2150. Each of such devices may contain one or more of computing device 2100, 2150, and an entire system may be made up of multiple computing devices 2100, 2150 communicating with each other.

Computing device 2150 includes a processor 2152, memory 2164, an input/output device such as a display 2154, a communication interface 2166, and a transceiver 2168, among other components. The device 2150 may also be provided with a storage device, such as a microdrive or other device, to provide additional storage. Each of the components 2150, 2152, 2164, 2154, 2166, and 2168, are interconnected using various buses, and several of the components may be mounted on a common motherboard or in other manners as appropriate.

The processor 2152 can execute instructions within the computing device 2150, including instructions stored in the memory 2164. The processor may be implemented as a chipset of chips that include separate and multiple analog and digital processors. Additionally, the processor may be implemented using any of a number of architectures. For example, the processor 410 may be a CISC (Complex Instruction Set Computers) processor, a RISC (Reduced Instruction Set Computer) processor, or a MISC (Minimal Instruction Set Computer) processor. The processor may provide, for example, for coordination of the other components of the device 2150, such as control of user interfaces, applications run by device 2150, and wireless communication by device 2150.

Processor 2152 may communicate with a user through control interface 2158 and display interface 2156 coupled to a display 2154. The display 2154 may be, for example, a TFT (Thin-Film-Transistor Liquid Crystal Display) display or an OLED (Organic Light Emitting Diode) display, or other appropriate display technology. The display interface 2156 may comprise appropriate circuitry for driving the display 2154 to present graphical and other information to a user. The control interface 2158 may receive commands from a user and convert them for submission to the processor 2152. In addition, an external interface 2162 may be provide in communication with processor 2152, so as to enable near area communication of device 2150 with other devices. External interface 2162 may provide, for example, for wired communication in some implementations, or for wireless communication in other implementations, and multiple interfaces may also be used.

The memory 2164 stores information within the computing device 2150. The memory 2164 can be implemented as one or more of a computer-readable medium or media, a volatile memory unit or units, or a non-volatile memory unit or units. Expansion memory 2174 may also be provided and connected to device 2150 through expansion interface 2172, which may include, for example, a SIMM (Single In Line Memory Module) card interface. Such expansion memory 2174 may provide extra storage space for device 2150, or may also store applications or other information for device 2150. Specifically, expansion memory 2174 may include instructions to carry out or supplement the processes described above, and may include secure information also. Thus, for example, expansion memory 2174 may be provide as a security module for device 2150, and may be programmed with instructions that permit secure use of device 2150. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 2164, expansion memory 2174, or memory on processor 2152 that may be received, for example, over transceiver 2168 or external interface 2162..

Device 2150 may communicate wirelessly through communication interface 2166, which may include digital signal processing circuitry where necessary. Communication interface 2166 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 2168. In addition, short-range communication may occur, such as using a Bluetooth, WiFi, or other such transceiver (not shown). In addition, GPS (Global Positioning System) receiver module 2170 may provide additional navigation- and location-related wireless data to device 2150, which may be used as appropriate by applications running on device 2150.

Device 2150 may also communicate audibly using audio codec 2160, which may receive spoken information from a user and convert it to usable digital information. Audio codec 2160 may likewise generate audible sound for a user, such as through a speaker, e.g., in a handset of device 2150. Such sound may include sound from voice telephone calls, may include recorded sound (e.g., voice messages, music files, etc.) and may also include sound generated by applications operating on device 2150.

The computing device 2150 may be implemented in a number of different forms, as shown in the figure. For example, it may be implemented as a cellular telephone 2180. It may also be implemented as part of a smartphone 2182, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), peer-to-peer networks (having ad-hoc or static members), grid computing infrastructures, and the Internet.

The computing system can include clients and servers. A client and server are generally remote from each other and typically interact through a communication network. The relationship of client and server arises by virtue of computer programs running on the respective computers and having a client-server relationship to each other.

Although a few implementations have been described in detail above, other modifications are possible. Moreover, other mechanisms for generating and processing columnar storage representations of nested records may be used. In addition, the logic flows depicted in the figures do not require the particular order shown, or sequential order, to achieve desirable results. Other steps may be provided, or steps may be eliminated, from the described flows, and other components may be added to, or removed from, the described systems. Accordingly, other implementations are within the scope of the following claims.

**Claims**

1. A computer-implemented method comprising:

   accessing, by a computing system (1908), a collection of data records (1906) that are stored in computer memory, each record in the collection of data records (1906) including a plurality of data values and a plurality of data elements that identify semantics of corresponding data values from the plurality of data values, one or more of the data records in the collection of data records each including multiple instances of a same data element and including data values that correspond to the multiple instances of the same data element, wherein each record in the collection of data records is structured according to a predetermined schema, wherein at least one data record in the collection of data records includes data elements and corresponding data values that are stored according to a nested data model;
   generating, by the computing system, a collection of columnar stripes (1910), the collection of columnar stripes including the data values from each data record in the collection of data records (1906), each columnar stripe in the collection of columnar stripes (1910) including all data values that correspond to a specific data element from each of the records in the collection of records (1906), wherein the specific data element is defined in the predetermined schema, wherein, in each columnar stripe, the data values are stored consecutively in order of the data records in the collection of data records, wherein each particular data element, of the data elements that are included in the collection of records (1906), is associated with a respective path, which is provided with regard to the particular data element in the data records of the collection of data records and which includes the particular data element and one or more parent data elements to the particular data element;

generating, for storage with the data values in the collection of columnar stripes (1910), a repetition value for each particular data value in the collection of columnar stripes (1910), wherein the repetition value for each particular data value identifies a most-recently repeated data element in the path of the particular data element that corresponds to the particular data value, and wherein the most recently-repeated data element in the path of the particular data element is the data element in the path of the particular data element that is encountered for a second time during an analysis, of a particular data record that includes the particular data value, that works upwards towards a beginning of the particular data record from a position of the particular data value in the particular data record; and

generating, for storage with the data values in the columnar stripes (1910), a definition value for each particular path or portion of the particular path in the collection of data records (1906), wherein the definition value for the particular path or portion of the particular path identifies a quantity of data elements included in the particular path or portion of path.

2. The method of claim 1, further comprising:
reconstructing, from (i) the columnar stripes in the collection of columnar stripes, and (ii) the repetition value and the definition value, a set of records that contains just a subset of data elements from the records in the collection of data records.

3. The method of any one of claims 1 or 2, further comprising:

receiving, by the computing system, information from a collection of data sources, each data source including information that is not structured according to the predetermined schema; and
generating, by the computing system, each data record in the collection of data records by structuring the information in each data source according to the schema.

4. The method of any one of claims 1 through 3, further comprising:

performing, by the computing system, a query within the collection of columnar stripes; and
outputting, by the computing system and in response to performance of the query, a new columnar stripe that includes a subset of the values from a columnar stripe from the collection of columnar stripes that are identified by the query.

5. The method of claim 4, wherein the query of the collection of columnar stripes is performed without loading the data values included in the collection of columnar stripes into a database.

6. The method of any one of claims 1 through 5, wherein at least a first columnar stripe of the collection of columnar stripes includes multiple blocks of data, at least some of the multiple blocks of data each including an assertion value that defines a kind of values that are found in each block's values, so that the computing system, when performing a query of the first columnar stripe, avoids querying one or more blocks of data that do not include a data value that is specified by the query.

7. The method of any one of claims 1 through 6, wherein:

a first data record includes a first data element and a second data element, the first data element being a parent data element to the second data element, and the second data element being a child data element to the first data element;
a first columnar stripe includes a data value that corresponds to the first data element in the first data record and all other data values that correspond to instances of the first data element in the collection of data records; and
a second columnar stripe includes a data value that corresponds to the second data element in the first data record and all other data values that correspond to instances of the second data element in the collection of data records.

8. The method of any one of claims 1 to 7, wherein the repetition value and the definition value are stored as bit sequences in a single byte.

9. A computer program product, tangibly stored on a computer-readable storage device, the product comprising computer program instructions which, when executed by one or more processors, cause the one or more processors to perform operations according to any one of claims 1 to 8.

10. A system comprising:

one or more programmable processors; and
a computer-readable storage device coupled to the one or more programmable processors and having instructions stored therein, which when executed by the one or more programmable processors causes the one or more programmable processors to perform operations according to any one of claims 1 to 8.

**Patentansprüche**

1. Ein computerimplementiertes Verfahren, umfassend:

Zugreifen auf eine Sammlung von Datensätzen (1906), die im Computerspeicher gespeichert sind, durch ein Computersystem (1908), wobei jeder Datensatz in der Sammlung von Datensätzen (1906) eine Vielzahl von Datenwerten und eine Vielzahl von Datenelementen beinhaltet, die die Semantik entsprechender Datenwerte aus der Vielzahl von Datenwerten identifizieren, wobei eine oder mehrere der Datensätze in der Sammlung von Datensätzen jeweils mehrere Instanzen eines gleichen Datenelements beinhalten und Datenwerte beinhalten, die den mehreren Instanzen desselben Datenelements entsprechen, wobei jeder Datensatz in der Sammlung von Datensätzen nach einem vorgegebenen Schema strukturiert ist, wobei mindestens ein Datensatz in der Sammlung von Datensätzen Datenelemente und entsprechende Datenwerte beinhaltet, die gemäß einem verschachtelten Datenmodell gespeichert sind;
Erzeugen einer Sammlung von Spaltenstreifen (1910) durch das Computersystem, wobei die Sammlung von Spaltenstreifen die Datenwerte aus jedem Datensatz in der Sammlung von Datensätzen (1906) beinhaltet, wobei jeder Spaltenstreifen in der Sammlung von Spaltenstreifen (1910) alle Datenwerte beinhaltet, die einem bestimmten Datenelement aus jedem der Datensätze in der Sammlung von Datensätzen (1906) entsprechen, wobei das spezifische Datenelement in dem vorbestimmten Schema definiert ist, wobei in jedem Spaltenstreifen, die Datenwerte nacheinander in der Reihenfolge der Datensätze in der Sammlung von Datensätzen gespeichert werden, wobei jedes bestimmte Datenelement der Datenelemente, die in der Sammlung von Datensätzen (1906) enthalten sind, einem entsprechenden Pfad zugeordnet ist, der in Bezug auf das bestimmte Datenelement in den Datensätzen der Sammlung von Datensätzen vorgesehen ist und der das bestimmte Datenelement und ein oder mehrere übergeordnete Datenelemente zu dem bestimmten Datenelement beinhaltet;
Erzeugen eines Wiederholungswertes für jeden bestimmten Datenwert in der Sammlung von Spaltenstreifen (1910) zur Speicherung mit den Datenwerten in der Sammlung von Spaltenstreifen (1910), wobei der Wiederholungswert für jeden bestimmten Datenwert ein sich zuletzt wiederholendes Datenelement im Pfad des jeweiligen Datenelements identifiziert, das dem jeweiligen Datenwert entspricht, und wobei das sich zuletzt wiederholende Datenelement im Pfad des jeweiligen Datenelements das Datenelement im Pfad des jeweiligen Datenelements ist, das während einer Analyse ein zweites Mal angetroffen wird, eines bestimmten Datensatzes, der den bestimmten Datenwert beinhaltet, der von einer Position des bestimmten Datenwerts in dem bestimmten Datensatz nach oben auf einen Anfang des bestimmten Datensatzes hinarbeitet; und
Erzeugen eines Definitionswertes für jeden bestimmten Pfad oder Abschnitt des bestimmten Pfades in der Sammlung von Datensätzen (1906) zur Speicherung mit den Datenwerten in den Spaltenstreifen (1910), wobei der Definitionswert für den bestimmten Pfad oder Abschnitt des bestimmten Pfades eine Menge von Datenelementen identifiziert, die in dem bestimmten Pfad oder Abschnitt des Pfades enthalten sind.

2. Verfahren nach Anspruch 1, ferner umfassend:
Rekonstruieren eines Satzes von Datensätzen, der nur eine Teilmenge von Datenelementen aus den Datensätzen in der Sammlung von Datensätzen enthält, aus (i) den Spaltenstreifen in der Sammlung von Spaltenstreifen und (ii) dem Wiederholungswert und dem Definitionswert.

**3.** Verfahren nach einem der Ansprüche 1 oder 2, ferner umfassend:

Empfangen von Informationen aus einer Sammlung von Datenquellen durch das Computersystem, wobei jede Datenquelle Informationen enthält, die nicht nach dem vorgegebenen Schema strukturiert sind; und Erzeugen jedes Datensatzes in der Sammlung von Datensätzen durch das Computersystem, indem die Informationen in jeder Datenquelle gemäß dem Schema strukturiert werden.

**4.** Verfahren nach einem der Ansprüche 1 bis 3, ferner umfassend:

Ausführen einer Abfrage durch das Computersystem innerhalb der Sammlung von Spaltenstreifen; und Ausgeben eines neuen Spaltenstreifens, der eine Teilmenge der Werte eines Spaltenstreifens aus der Sammlung von Spaltenstreifen, die durch die Abfrage identifiziert werden, enthält, durch das Computersystem als Reaktion auf die Durchführung der Abfrage.

**5.** Verfahren nach Anspruch 4, wobei die Abfrage der Sammlung von Spaltenstreifen durchgeführt wird, ohne die in der Sammlung von Spaltenstreifen enthaltenen Datenwerte in eine Datenbank zu laden.

**6.** Verfahren nach einem der Ansprüche 1 bis 5, wobei mindestens ein erster Spaltenstreifen der Sammlung von Spaltenstreifen mehrere Datenblöcke beinhaltet, wobei mindestens einige der mehreren Blöcke jeweils einen Aussagewert beinhalten, der eine Art von Werten definiert, die in den Werten jedes Blocks vorkommen, so dass das Computersystem bei der Durchführung einer Abfrage des ersten Spaltenstreifens das Abfragen eines oder mehrerer Datenblöcke vermeidet, die keinen Datenwert beinhalten, der durch die Abfrage spezifiziert wird.

**7.** Verfahren nach einem der Ansprüche 1 bis 6, wobei:

ein erster Datensatz ein erstes Datenelement und ein zweites Datenelement beinhaltet, wobei das erste Datenelement ein übergeordnetes Datenelement zum zweiten Datenelement und das zweite Datenelement ein untergeordnetes Datenelement zum ersten Datenelement ist; ein erster Spaltenstreifen einen Datenwert beinhaltet, der dem ersten Datenelement im ersten Datensatz und allen anderen Datenwerten entspricht, die Instanzen des ersten Datenelements bei der Sammlung von Datensätzen entsprechen; und ein zweiter Spaltenstreifen einen Datenwert beinhaltet, der dem zweiten Datenelement im ersten Datensatz entspricht, und alle anderen Datenwerte, die Instanzen des zweiten Datenelements bei der Sammlung von Datensätzen entsprechen.

**8.** Verfahren nach einem der Ansprüche 1 bis 7, wobei der Wiederholungswert und der Definitionswert als Bitfolgen in einem einzelnen Byte gespeichert sind.

**9.** Computerprogrammprodukt, das auf einer computerlesbaren Speichervorrichtung greifbar gespeichert ist, wobei das Produkt Computerprogrammanweisungen umfasst, die, wenn sie von einem oder mehreren Prozessoren ausgeführt werden, einen oder mehrere Prozessoren veranlassen, Operationen nach einem der Ansprüche 1 bis 8 durchzuführen.

**10.** System, umfassend:
einen oder mehrere programmierbare Prozessoren; und
eine computerlesbare Speichervorrichtung, die mit den ein oder mehreren programmierbaren Prozessoren gekoppelt ist und darin gespeicherte Anweisungen aufweist, die, wenn sie von den ein oder mehreren programmierbaren Prozessoren ausgeführt werden, die einen oder mehrere programmierbare Prozessoren veranlassen, Operationen nach einem der Ansprüche 1 bis 8 durchzuführen.

**Revendications**

**1.** Un procédé mis en oeuvre par ordinateur comprenant :

le fait d'accéder, par un système informatique (1908), à un ensemble d'enregistrements de données (1906) qui sont stockés dans une mémoire d'ordinateur, chaque enregistrement présent dans l'ensemble d'enregistrements de données (1906) comprenant une pluralité de valeurs de données et une pluralité d'éléments de données qui identifient la sémantique de valeurs de données correspondantes parmi la pluralité de valeurs de données, un ou plusieurs des enregistrements de données présents dans l'ensemble d'enregistrements de données comprenant chacun des instances multiples d'un même élément de données et comprenant des valeurs de données qui correspondent aux instances multiples du même élément de données, chaque enregistrement présent dans l'ensemble d'enregistrements de données étant structuré selon un schéma prédéterminé, au moins un enregistrement de données présent dans l'ensemble d'enregistrements de données incluant des éléments de données et des valeurs de données correspondantes qui sont stockées selon un modèle de données imbriqué ;

le fait de générer, par le système informatique, un ensemble de bandes en colonnes (1910), l'ensemble de bandes en colonnes incluant les valeurs de données provenant de chaque enregistrement de données présent dans l'ensemble d'enregistrements de données (1906), chaque bande en colonnes présente dans l'ensemble de bandes en colonnes (1910) incluant toutes les valeurs de données qui correspondent à un élément de données spécifique provenant de chaque enregistrement présent dans l'ensemble d'enregistrements (1906), l'élément de données spécifique étant défini dans le schéma prédéterminé, les valeurs de données étant, dans chaque bande en colonnes, stockées consécutivement dans l'ordre des enregistrements de données présents dans l'ensemble des enregistrements de données, chaque élément de données particulier, faisant partie des éléments de données qui sont inclus dans l'ensemble d'enregistrements (1906), étant associé à un chemin respectif, qui est prévu en relation avec l'élément de données particulier présent dans les enregistrements de données de l'ensemble des enregistrements de données et qui inclut l'élément de données particulier et un ou plusieurs éléments de données parents à l'élément de données particulier ;

le fait de générer, pour le stockage avec les valeurs de données dans l'ensemble de bandes en colonnes (1910), une valeur de répétition pour chaque valeur de données particulière présente dans l'ensemble de bandes en colonnes (1910), la valeur de répétition pour chaque valeur de données particulière identifiant un élément de données répété le plus récemment dans le chemin de l'élément de données particulier qui correspond à la valeur de données particulière, et l'élément de données répété le plus récemment dans le chemin de l'élément de données particulier étant l'élément de données présent dans le chemin de l'élément de données particulier qui est rencontré une deuxième fois au cours d'une analyse, d'un enregistrement de données particulier qui inclut la valeur de données particulière, qui travaille vers le haut en direction d'un début de l'enregistrement de données particulier depuis une position de la valeur particulière des données présente dans l'enregistrement particulier ; et

le fait de générer, pour le stockage avec les valeurs de données dans les bandes en colonnes (1910), une valeur de définition pour chaque chemin particulier ou partie du chemin particulier dans l'ensemble d'enregistrements de données (1906), la valeur de définition pour le chemin particulier ou la partie du chemin particulier identifiant une quantité d'éléments de données inclus dans le chemin particulier ou une partie de ce chemin.

2. Le procédé selon la revendication 1, comprenant en outre :
le fait de reconstruire, à partir (i) des bandes en colonnes présentes dans l'ensemble des bandes en colonnes et (ii) de la valeur de répétition et de la valeur de définition, un ensemble d'enregistrements qui contient seulement un sous-ensemble d'éléments de données provenant des enregistrements présents dans l'ensemble d'enregistrements de données.

3. Le procédé de l'une quelconque des revendications 1 ou 2, comprenant en outre :

le fait de recevoir, par le système informatique, des informations provenant d'un ensemble de sources de données, chaque source de données comprenant des informations qui ne sont pas structurées selon le schéma prédéterminé ; et
le fait de générer, par le système informatique, chaque enregistrement de données dans l'ensemble des enregistrements de données en structurant l'information dans chaque source de données selon le schéma.

4. Le procédé de l'une quelconque des revendications 1 à 3, comprenant en outre :

le fait d'effectuer, par le système informatique, une requête au sein de l'ensemble de bandes en colonnes ; et
le fait de délivrer en sortie, par le système informatique et en réponse à la mise en oeuvre de la requête, une nouvelle bande en colonnes qui inclut un sous-ensemble des valeurs provenant d'une bande en colonnes de l'ensemble des bandes en colonnes qui sont identifiées par la requête.

5. Le procédé selon la revendication 4, dans lequel la requête de l'ensemble de bandes en colonnes est effectuée sans charger les valeurs de données incluses dans l'ensemble de bandes en colonnes dans une base de données.

**6.** Le procédé de l'une quelconque des revendications 1 à 5, dans lequel au moins une première bande en colonnes de l'ensemble de bandes en colonnes comprend plusieurs blocs de données, au moins certains des multiples blocs de données comprenant chacun une valeur d'affirmation qui définit un type de valeurs qui se trouvent dans les valeurs de chaque bloc, de sorte que le système informatique, lorsqu'il effectue une requête de la première bande en colonnes, évite de rechercher un ou plusieurs blocs de données qui ne comprennent pas une valeur de données qui est spécifiée dans la requête.

**7.** Le procédé de l'une quelconque des revendications 1 à 6, dans lequel :

un premier enregistrement de données comprend un premier élément de données et un deuxième élément de données, le premier élément de données étant un élément de données parent du deuxième élément de données, et le deuxième élément de données étant un élément de données enfant du premier élément de données ;
une première bande en colonnes comprend une valeur de données qui correspond au premier élément de données du premier enregistrement de données et toutes les autres valeurs de données qui correspondent à des instances du premier élément de données présent dans l'ensemble des enregistrements de données ; et
une deuxième bande en colonnes comprend une valeur de données qui correspond au deuxième élément de données présent dans le premier enregistrement de données et toutes les autres valeurs de données qui correspondent à des instances du deuxième élément de données présent dans l'ensemble des enregistrements de données.

**8.** Le procédé selon l'une quelconque des revendications 1 à 7, dans lequel la valeur de répétition et la valeur de définition sont mémorisées sous forme de séquences de bits dans un octet unique.

**9.** Un produit de programme d'ordinateur, stocké de manière tangible sur un dispositif de stockage lisible par ordinateur, le produit comprenant des instructions de programme d'ordinateur qui, lorsqu'elles sont exécutées par un ou plusieurs processeurs, amènent un ou plusieurs processeurs à mettre en oeuvre des opérations selon l'une quelconque des revendications 1 à 8.

**10.** Un système comprenant :

un ou plusieurs processeurs programmables ; et
un dispositif de stockage lisible par ordinateur relié audit ou auxdits processeurs programmables et comportant des instructions stockées en lui, qui, lorsqu'elles sont exécutées par ledit ou lesdits processeurs programmables, amènent le ou les processeurs programmables à mettre en oeuvre des opérations selon l'une quelconque des revendications 1 à 8.

FIG. 1

```
DocId: 10              r₁
Links
  Forward: 20
  Forward: 40
  Forward: 60
Name
  Language
      Code: 'en-us'
      Country: 'us'
  Language
      Code: 'en'
  Url: 'http://A'
Name
  Url: 'http://B'
Name
  Language
      Code: 'en-gb'
      Country: 'gb'
```

```
message Document {
  required int64 DocID;
  optional group Links {
    repeated int64 Backward;
    repeated int64 Forward; }
  repeated group Name {
    repeated group Language {
      required string Code;
      optional string Country; }
    optional string Url; }}
```

```
DocID: 20              r₂
Links
  Backward: 10
  Backward: 30
  Forward: 80
Name
Url: 'http://c'
```

FIG. 2

| DocId | | |
|---|---|---|
| 10 | 0 | 0 |
| 20 | 0 | 0 |

| Name.Url | | |
|---|---|---|
| http://A | 0 | 2 |
| http://B | 1 | 2 |
| NULL | 1 | 1 |
| http://C | 0 | 2 |

| Links.Forward | | |
|---|---|---|
| 20 | 0 | 2 |
| 40 | 1 | 2 |
| 60 | 1 | 2 |
| 80 | 0 | 2 |

| Links.Backward | | |
|---|---|---|
| NULL | 0 | 1 |
| 10 | 0 | 2 |
| 30 | 1 | 2 |

| Name.Language.Code | | |
|---|---|---|
| en-us | 0 | 2 |
| en | 2 | 2 |
| NULL | 1 | 1 |
| en-gb | 1 | 2 |
| NULL | 0 | 1 |

| Name.Language.Country | | |
|---|---|---|
| us | 0 | 3 |
| NULL | 2 | 2 |
| NULL | 1 | 1 |
| gb | 1 | 3 |
| NULL | 0 | 1 |

FIG. 3

```
procedure DissectRecord (RecordDecoder decoder,
              FieldWriter writer, int repetitionLevel) :
 Add current repetitionLevel and definition level to writer
 seenFields = {} // empty set of integers
 while decoder has more field values
   FieldWriter chWriter =
     child of writer for field read by decoder
   int chRepetitionLevel = repetitionLevel
   if set seenFields contains field ID of chWriter
     chRepetitionLevel = tree depth of chWriter
   else
     Add field ID of chWriter to seenFields
   end if
   if chWriter corresponds to an atomic field
     Write value of current field read by decoder
     using chWriter at chRepetitionLevel
   else
     DissectRecord (new RecordDecoder for nested record
       read by decoder, chWriter, chRepetitionLevel)
   end if
 end while
end procedure
```

FIG. 4

DocId

0

1 ⟲ Links.Backward → 0 → Links.Forward ⟲ 1

0

Name.Language.Code — 0, 1, 2 → Name.Language.Country

2

1

Name.Url

0, 1

1

0

FIG. 5

DocId

0

1,2 ⟲ Name.Language.Country

0

```
DocID: 10          S₁
Name
  Language
    Country: 'us'
  Language
Name
  Language
    Country: 'gb;
```

```
DocID: 20          S₂
Name
```

FIG. 6

```
procedure ConstructFSM(Field [] fields) :
for each field in fields:
  maxLevel = maximal repetition level of field
  barrier = next field after field or final FSM state otherwise
  barrierLevel = common repletion level of field and barrier
  for each preField before field whose
       repetition level is larger than barrierLevel:
    backLevel = common repetition level of preField and field
    Set transition (field, backLevel)-> preField
  end for
  for each level in [barrierLevel+1..maxLevel]
       that lacks transition from field:
    Copy transition's destination from that of level-1
  end for
  for each level in [0..barrierLevel]:
    Set transition (field, level) -> barrier
  end for
end for
end procedure
```

FIG. 7

```
Record AssembleRecord(FieldReaders[] readers) :
  record = create a new record
  lastReader = select the root field reader in readers
  reader = readers [0]
  while reader has data
    Fetch next value from reader
    if current value is not NULL
      MoveToLevel (tree level of reader, reader)
      Append reader's value to record
    else
      MoveToLevel (full definition level of reader, reader)
    end if
    reader = reader that FSM transitions to
      when reading next repetition level from reader
    ReturnToLevel (tree level of reader)
  end while
  ReturnToLevel (0)
  End all nested records
  return record
end procedure

MoveToLevel (int newLevel, FieldReader nextReader):
  End nested records up to the level of the lowest common ancestor
    of lastReader and nextReader
  Start nested records from the level of the lowest common ancestor
    up to newLevel
  Set lastReader to the one at newLevel
end procedure

ReturnToLevel (int newLevel) {
  End nested records up to newLevel
  Set lastReader to the one at newLevel
end procedure
```

FIG. 8

```
SELECT DocId AS Id,
    COUNT (Name.Language.Code) WRITTEN Name AS Cnt,
    Name.Url + ',' + Name.Language.Code AS Str
FROM t
WHERE REGEXP (Name.Url, '^http') AND DocId <20;
```

```
Id: 10                         t₁
Name
  Cnt: 2
  Language
   Str: 'http://A,en-us'
   Str: 'http://A,en'
Name
  Cnt: 0
```

```
message QueryResult {
  required int64 Id;
  repeated group Name {
   optional unit64 Cnt;
   repeated group Language {
    optional string Str;}}}
```

**FIG. 9**

**FIG. 10**

| Name | records | (compressed) | of fields | center | factor |
|---|---|---|---|---|---|
| T1 | 85 billion | 87 TB | 270 | A | 3x |
| T2 | 24 billion | 13 TB | 530 | A | 3x |
| T3 | 4 billion | 70 TB | 1200 | A | 3x |
| T4 | 1+ trillion | 105 TB | 50 | B | 3x |
| T5 | 1+ trillion | 20 TB | 30 | B | 2x |

FIG. 11

FIG. 12

**Execution Time (Sec)**

FIG. 13

**Execution Time (Sec)**

FIG. 14

## Percentage of Processed Tablets

FIG. 15

## Execution Time (Sec)

FIG. 16

**Percentage of Processed Tablets**

FIG. 17

**Percentage of Queries**

FIG. 18

FIG. 19

1900

Common Storage Layer 1922

1902 Schema

1914 Output Columns

1910 Columnar Data

1908 Column Generator

1906 Collection of Records

1904 Record Generator

1912 Querying System

1916 Record Assembler

1918 Output Records

1920 Data Sources

*2002*

Generate Records

*2004*

Access Records

No —— Additional Fields? — *2006*

End

Yes *2008*

Generate List of Values for a Particular Field

*2010*

Generate Repetition Levels for Particular Field

*2012*

Generate Definition Levels for Particular Field

*2014*

Assemble Columnar Stripe for Particular Field

*2016*

Break Columnar Strip into Blocks

FIG. 20

FIG. 21

## REFERENCES CITED IN THE DESCRIPTION

**Non-patent literature cited in the description**

- SW-Store: a vertically partitioned DBMS for Semantic Web data management. **DANIEL J. ABADI et al.** The VLDB Journal ; The International Journal of Very Large Data Bases. Springer, 04 February 2009, vol. 18, 385-406
- **L. A. BARROSO ; U. HOLZLE.** The Datacenter as a Computer: An Introduction to the Design of Warehouse-Scale Machines. Morgan & Claypool Publishers, 2009
- **G. CZAJKOWSKI.** Official Google Blog. *Sorting 1PB with MapReduce,* November 2008, http://google-blog.blogspot.com/2008/11/sorting-1pb-with-mapreduce.html.
- **S. GHEMAWAT ; H. GOBIOFF ; S.-T. LEUNG.** The Google File System. *SOSP,* 2003
- **F. CHANG ; J. DEAN ; S. GHEMAWAT ; W. C. HSIEH ; D. A. WALLACH ; M. BURROWS ; T. CHANDRA ; A. FIKES ; R. GRUBER.** Bigtable: A Distributed Storage System for Structured Data. *OSDI,* 2006
- **J. DEAN ; S. GHEMAWAT.** MapReduce: Simplified Data Processing on Large Clusters. *OSDI,* 2004
- **J. DEAN.** Challenges in Building Large-Scale Information Retrieval Systems: Invited Talk. *WSDM,* 2009
- **C. OLSTON ; B. REED ; U. SRIVASTAVA ; R. KUMAR ; A. TOMKINS.** Pig Latin: a Not-so-Foreign Language for Data Processing. *SIGMOD,* 2008
- **D. J. ABADI ; P. A. BONCZ ; S. HARIZOPOULOS.** Column-Oriented Database Systems. *VLDB,* 2009, vol. 2 (2
- **R. PIKE ; S. DORWARD ; R. GRIESEMER ; S. QUINLAN.** Interpreting the Data: Parallel Analysis with Sawzall. *Scientific Programming,* 2005, vol. 13 (4
- **C. CHAMBERS ; A. RANIWALA ; F. PERRY ; S. ADAMS ; R. HENRY ; R. BRADSHAW ; N. WEIZENBAUM.** FlumeJava: Easy, Efficient Data-Parallel Pipelines. *PLDI,* 2010